(19)

**Europäisches Patentamt**
**European Patent Office**
**Office européen des brevets**

(11) **EP 4 296 076 A1**

(12) **EUROPEAN PATENT APPLICATION**
published in accordance with Art. 153(4) EPC

(43) Date of publication:
**27.12.2023 Bulletin 2023/52**

(21) Application number: **22756329.3**

(22) Date of filing: **21.02.2022**

(51) International Patent Classification (IPC):
**B60C 1/00** $^{(2006.01)}$    **C08J 3/22** $^{(2006.01)}$
**C08K 5/06** $^{(2006.01)}$    **C08L 1/00** $^{(2006.01)}$
**C08L 1/02** $^{(2006.01)}$    **C08L 7/00** $^{(2006.01)}$
**C08L 9/00** $^{(2006.01)}$    **C08L 21/00** $^{(2006.01)}$
**C08L 71/02** $^{(2006.01)}$

(52) Cooperative Patent Classification (CPC):
**B60C 1/00; C08J 3/22; C08K 5/06; C08L 1/00;**
**C08L 1/02; C08L 7/00; C08L 9/00; C08L 21/00;**
**C08L 71/02**

(86) International application number:
**PCT/JP2022/007021**

(87) International publication number:
**WO 2022/177012 (25.08.2022 Gazette 2022/34)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **22.02.2021  JP 2021026088**
**02.12.2021  JP 2021196418**

(71) Applicant: **Asahi Kasei Kabushiki Kaisha**
**Tokyo 1000006 (JP)**

(72) Inventors:
• **BAMBA, Atsushi**
**Tokyo 100-0006 (JP)**
• **KAWAHARA, Kazufumi**
**Tokyo 100-0006 (JP)**
• **OZAWA, Ryosuke**
**Tokyo 100-0006 (JP)**

(74) Representative: **D Young & Co LLP**
**120 Holborn**
**London EC1N 2DY (GB)**

(54) **COMPOSITION CONTAINING CELLULOSE NANOFIBERS**

(57)    Provided are: a rubber composite in which cellulose nanofibers are well-dispersed in rubber and which has favorable characteristics (in particular, storage modulus, etc.) that make it possible to form a vulcanized rubber product having an excellent elastic modulus, excellent wear resistance, etc.; and a cellulose nanofiber-containing composition from which said rubber composite can be formed. Provided is a composition containing cellulose nanofibers and a nonionic surfactant, wherein the nonionic surfactant has, as a hydrophobic moiety, a group that has 6 -30 carbon atoms and is an aliphatic or aromatic or a combination thereof.

FIG. 1

**Description**

FIELD

One aspect of the present disclosure relates to a composition containing cellulose nanofibers.

BACKGROUND

Conventional rubber molded articles are required to exhibit high balance between various physical properties such as mechanical strength, softness, abrasion resistance and workability, and it is common to add fillers to rubber molded articles in order to improve their elastic modulus and abrasion resistance, for example. In order for rubber molded articles containing such fillers to exhibit the desired properties it is important for the fillers to be satisfactorily dispersed in the rubber.

PTL 1, for example, describes a tire rubber composition comprising 1 to 50 parts by mass of oxidized cellulose nanofibers added with respect to 100 parts by mass of diene rubber containing at least 5 mass% of modified diene rubber with polar groups at 0.1 mol% or greater, for the purpose of providing a tire rubber composition exhibiting improved mechanical properties over the prior art.

[CITATION LIST]

[PATENT LITERATURE]

[PTL 1] Japanese Unexamined Patent Publication No. 2019-147877

SUMMARY

[TECHNICAL PROBLEM]

With increasing awareness of environmental issues in recent years, many attempts have been made to utilize cellulose, a material with low specific gravity and high renewability, as a filler in rubber molded articles. Cellulose nanofibers are considered particularly promising as a filler for polymer molded articles because of their satisfactory reinforcing effect for their amounts used in polymer molded articles, when they are combined with different polymers to form polymer molded articles. Using such cellulose nanofibers in rubber molded articles is expected to make possible rubber molded articles with low specific gravity and excellent physical properties that can be utilized for a wide variety of purposes, with advantages in terms of transport cost and disposal cost. However, since cellulose nanofibers are essentially hydrophilic due to the hydroxyl groups in cellulose, it has been difficult to combine them with rubber, which is a highly hydrophobic material, and therefore rubber molded articles with cellulose nanofibers satisfactorily dispersed in rubber have not been provided in the prior art.

It is an object of one aspect of the invention to solve this problem by providing a rubber composite having satisfactory dispersion of cellulose nanofibers in rubber and having satisfactory properties (especially storage modulus) allowing formation of rubber molded articles with an excellent elastic modulus and excellent abrasion resistance, as well as a cellulose nanofiber-containing composition that is able to form the rubber composite.

[SOLUTION TO PROBLEM]

Specifically, the present disclosure encompasses the following aspects.

[1] A composition including cellulose nanofibers and a nonionic surfactant, wherein the nonionic surfactant has an aliphatic or aromatic group of 6 to 30 carbon atoms, or a combination thereof, as a hydrophobic portion.

[2] The composition according to aspect 1, which includes the nonionic surfactant at 10 parts by mass to 50 parts by mass with respect to 100 parts by mass of the cellulose nanofibers.

[3] The composition according to aspect 1 or 2, wherein a degree of acyl substitution (DS) of the cellulose nanofibers is 0 to 1.7.

[4] The composition according to any one of aspects 1 to 3, wherein the nonionic surfactant has one or more structures selected from the group consisting of oxyethylene, glycerol and sorbitan as a hydrophilic portion, and the relationship between the number of carbon atoms n of the hydrophobic portion and the number of repeating units m of the hydrophilic portion satisfies the inequality: $n > m$.

[5] The composition according to any one of aspects 1 to 4, wherein the nonionic surfactant is one or more selected from the group consisting of compounds represented by the following general formula (1):

$$R\text{-}(OCH_2CH_2)_m\text{-}OH \qquad (1)$$

[where R represents an aliphatic or aromatic group of 6 to 30 carbon atoms, or a combination thereof, and m is a natural number smaller than the number of carbon atoms of R], and
compounds represented by the following general formula (2):

$$R_1OCH_2\text{-}(CHOH)_4\text{-}CH_2OR_2 \qquad (2)$$

[where $R_1$ and $R_2$ each independently represent a hydrogen atom, an aliphatic or aromatic group of 1 to 30 carbon atoms or a combination thereof, $-COR_3$ {where $R_3$ represents an aliphatic or aromatic group of 1 to 30 carbon atoms or a combination thereof}, or $-(CH_2CH_2O)_y\text{-}R_4$ {where $R_4$ represents a hydrogen atom or an aliphatic or aromatic group of 1 to 30 carbon atoms or a combination thereof, and y is an integer of 1 to 30}.

[6] The composition according to any one of aspects 1 to 5, which further includes a first rubber component.
[7] The composition according to aspect 6, wherein the first rubber component includes one or more selected from the group consisting of a styrene-butadiene rubber, a butadiene rubber, an isoprene rubber, a natural rubber, a chloroprene rubber, an acrylonitrile-butadiene rubber, a butyl rubber, a chlorinated butyl rubber, a brominated butyl rubber and an ethylene-propylene diene rubber, and derivatives thereof.
[8] The composition according to aspect 6 or 7, wherein the first rubber component is a liquid rubber and/or rubber latex particles.
[9] The composition according to aspect 8, wherein:

the first rubber component is liquid rubber, and
the liquid rubber includes one or more selected from the group consisting of a styrene-butadiene rubber, a butadiene rubber and an isoprene rubber, and derivatives thereof.

[10] The composition according to aspect 8, wherein:

the first rubber component is rubber latex particles, and
the rubber latex particles include one or more selected from the group consisting of a styrene-butadiene rubber, a butadiene rubber, an isoprene rubber, a natural rubber, a chloroprene rubber, an acrylonitrile-butadiene rubber, a butyl rubber, a chlorinated butyl rubber, a brominated butyl rubber and an ethylene-propylene diene rubber, and derivatives thereof.

[11] The composition according to any one of aspects 6 to 10, which includes, as solid content, the cellulose nanofibers at 0.5 mass% to 10 mass%, the nonionic surfactant at 10 parts by mass to 50 parts by mass with respect to 100 parts by mass of the cellulose nanofibers, and the first rubber component at 85 mass% to 99.45 mass%.
[12] The composition according to any one of aspects 6 to 11, wherein a weight-average molecular weight (Mw) of the first rubber component is 100,000 to 2,000,000.
[13] A method for producing a composition according to any one of aspects 6 to 12, wherein the method includes:

a first mixing step in which cellulose nanofibers and a nonionic surfactant are mixed to obtain a first mixture, and
a second mixing step in which the first mixture and a first rubber component are mixed to obtain a second mixture.

[14] The method according to aspect 13, which further includes a step of drying the first mixture after the first mixing step.
[15] The method according to aspect 13 or 14, wherein:

the first rubber component is a liquid rubber, and
the method further includes a step of drying the second mixture after the second mixing step.

[16] A powder composed of the composition according to any one of aspects 1 to 12.
[17] A powder composed of a composition that includes cellulose nanofibers and a surfactant, wherein:

a compacted bulk density of the powder is 0.01 g/cm$^3$ to 0.30 g/cm$^3$, and

a specific surface area of the powder is 5 m$^2$/g to 50 m$^2$/g.

[18] The powder according to aspect 17, wherein the composition is a composition according to any one of aspects 1 to 5.

[19] A master batch which is a kneaded blend of a powder according to any one of aspects 16 to 18 and a second rubber component.

[20] The master batch according to aspect 19, which includes the cellulose nanofibers at 10 parts by mass to 50 parts by mass and the nonionic surfactant at 1 part by mass to 25 parts by mass with respect to 100 parts by mass of the rubber component.

[21] A method for producing a master batch, wherein the method includes a step of kneading a powder according to any one of aspects 16 to 18 and a second rubber component to obtain a master batch.

[22] A rubber composite which is a kneaded blend of a powder according to any one of aspects 16 to 18 or a master batch according to aspect 19 or 20, and a third rubber component.

[23] A method for producing a rubber composite, wherein the method includes a step of obtaining a rubber composite by:

kneading a powder according to any one of aspects 16 to 18 and a third rubber component, or
forming a master batch by the method according to aspect 21 and then kneading the master batch with a third rubber component.

[24] A cured rubber product, which is the cured product of a rubber composite according to aspect 22.

[25] A method for producing a cured rubber product, wherein the method includes:

a step of obtaining a rubber composite by the method according to aspect 23, and
a step of curing the rubber composite to obtain a cured rubber product.

[26] A shoe outsole which includes a cured rubber product according to aspect 24.

[27] A tire which includes a cured rubber product according to aspect 24.

[28] Vibration-proof rubber which includes a cured rubber product according to aspect 24.

[29] A drive belt which includes a cured rubber product according to aspect 24.

[ADVANTAGEOUS EFFECTS OF INVENTION]

According to one aspect of the invention it is possible to provide a rubber composite having satisfactory dispersion of cellulose nanofibers in rubber and having satisfactory properties (especially storage modulus) allowing formation of rubber molded articles with an excellent elastic modulus and excellent abrasion resistance, as well as a cellulose nanofiber-containing composition that is able to form the rubber composite.

BRIEF DESCRIPTION OF DRAWINGS

Fig. 1 is an optical microscope image of the rubber composite obtained in Example 1.
Fig. 2 is an optical microscope image of the rubber composite obtained in Comparative Example 3.

DESCRIPTION OF EMBODIMENTS

An embodiment of the invention (hereunder referred to as "the embodiment") will now be explained as an example, with the understanding that the invention is not in any way limited to this embodiment. Unless otherwise specified, the property values mentioned throughout the present disclosure are values measured by the methods described herein under "Examples" or methods known to be equivalent to them by those skilled in the art.

<Composition including cellulose nanofibers and nonionic surfactant, and composition including cellulose nanofibers, nonionic surfactant and rubber component>

One aspect of the disclosure provides a composition that includes cellulose nanofibers and a nonionic surfactant (also referred to herein as "cellulose/surfactant composition").

Another aspect of the disclosure provides a composition that includes cellulose nanofibers, a nonionic surfactant and a first rubber component (also referred to herein as "rubber composition"). Specific preferred aspects of the cellulose nanofibers and the nonionic surfactant in the rubber composition may be the same as the specific preferred aspects of the cellulose nanofibers and nonionic surfactant in the cellulose/surfactant composition, and these will therefore be described collectively below.

The cellulose/surfactant composition of the embodiment may be combined with a wide range of matrix components (such as the first, second and/or third rubber component of the disclosure) to form a rubber composite.

The content of the nonionic surfactant having an aliphatic or aromatic group of 6 to 30 carbon atoms or a combination thereof, as a hydrophobic portion in the cellulose/surfactant composition, is preferably 10 parts by mass or greater or 20 parts by mass or greater, and preferably 50 parts by mass or lower, 40 parts by mass or lower or 30 parts by mass or lower, with respect to 100 parts by mass of the cellulose nanofibers.

Cellulose nanofibers are essentially hydrophilic due to their hydroxyl groups, while rubber is essentially hydrophobic, making it normally difficult to uniformly disperse cellulose nanofibers in rubber. The dispersibility of cellulose nanofibers can be improved to some extent by using modified rubber, for example, but the cellulose nanofibers preferably exhibit satisfactory dispersibility in a wide range of rubber types from the viewpoint of allowing application for a greater variety of purposes. As a result of much research in this regard, the present inventors have found that it is possible to obtain a rubber composition capable of forming cured rubber products in which the reinforcing effect of cellulose nanofibers is satisfactorily exhibited in a wide range of rubber types, if the cellulose nanofibers are combined with a specific nonionic surfactant.

Preferred examples for each of the components in the composition of the embodiment will now be described.

<Cellulose nanofibers>

The starting material for the cellulose nanofibers may be natural cellulose or regenerated cellulose. Natural cellulose includes wood pulp obtained from wood sources (broadleaf trees or conifers), nonwood pulp obtained from non-wood sources (cotton, bamboo, hemp, bagasse, kenaf, cotton linter, sisal and straw), and cellulose aggregates obtained from sources such as animals (such as sea squirts) and algae, and cellulose aggregates produced by microbes (such as acetic acid bacteria). Regenerated cellulose for use may be regenerated cellulose fibers (such as viscose, cupra and Tencel), cellulose derivative fibers, and superfine yarn of regenerated cellulose or cellulose derivatives, obtained by electrospinning methods.

According to one aspect, the cellulose nanofibers may be microcellulose fibers obtained by treating pulp with hot water, for example, at 100°C or higher, hydrolyzing the hemicellulose portion to weaken it, and then mechanically defibrating by a pulverizing method using a high-pressure homogenizer, microfluidizer, ball mill, disk mill or mixer (such as a homomixer). According to one aspect, the cellulose nanofibers have a number-average fiber diameter of 1 nm to 1000 nm. The cellulose nanofibers may also be chemically modified, as described below.

A slurry can be prepared by dispersing cellulose fiber in a liquid medium with the dispersion being carried out using a high-pressure homogenizer, microfluidizer, ball mill, disk mill or mixer (such as a homomixer), and for example, a defibration product can be obtained as the product of the slurry preparation step of the present disclosure. The liquid medium in the slurry may optionally include one or a combination of two or more other liquid media (such as organic solvents) in addition to water. Examples of organic solvents to be used include commonly used water-miscible organic solvents, such as alcohols with boiling points of 50°C to 170°C (for example, methanol, ethanol, n-propanol, i-propanol, n-butanol, i-butanol, s-butanol and t-butanol); ethers (for example, propyleneglycol monomethyl ether, 1,2-dimethoxyethane, diisopropyl ether, tetrahydrofuran and 1,4-dioxane); carboxylic acids (for example, formic acid, acetic acid and lactic acid); esters (for example, ethyl acetate and vinyl acetate); ketones (for example, acetone, methyl ethyl ketone, methyl isobutyl ketone, cyclopentanone and cyclohexanone); and nitrogen-containing solvents (such as dimethylformamide, dimethyl acetamide and acetonitrile). According to a typical aspect, the liquid medium in the slurry consists essentially of water.

Cellulose starting materials contain alkali-soluble components and sulfuric acid-insoluble components (such as lignin), and the alkali-soluble portion and the sulfuric acid-insoluble components may be reduced by carrying out refining steps such as delignification by digestion processing, and bleaching steps. However, since refining steps such as delignification by digestion processing, and bleaching steps, cut the molecular chains of the cellulose, altering its weight-average molecular weight and number-average molecular weight, it is preferred for the refining steps and bleaching steps for the cellulose starting material to be controlled so that the weight-average molecular weight and the weight-average molecular weight/number-average molecular weight ratio of the cellulose nanofibers do not deviate from the proper ranges.

Since refining steps such as delignification by digestion processing and bleaching steps lower the molecular weight of the cellulose molecules, this raises the concern that these steps may lead to low molecularization of the cellulose nanofibers and degeneration of the cellulose starting material, which increases the abundance ratio of the alkali-soluble portion. Since the alkali-soluble portion has poor heat resistance, refining and bleaching of the cellulose starting material is preferably controlled so that the amount of alkali-soluble components in the cellulose starting material is less than a certain value.

According to one aspect, the number-average fiber diameters of the cellulose nanofibers are preferably 2 to 1000 nm from the viewpoint of obtaining a satisfactory improving effect on the physical properties by the cellulose nanofibers. The number-average fiber diameter of the cellulose nanofibers is more preferably 4 nm or greater, 5 nm or greater, 10 nm or greater, 15 nm or greater or 20 nm or greater, and more preferably 500 nm or smaller, 450 nm or smaller, 400 nm or smaller, 350 nm or smaller, 300 nm or smaller or 250 nm or smaller.

The mean fiber length (L)/fiber diameter (D) ratio of the cellulose nanofibers is preferably 30 or greater, 50 or greater, 80 or greater, 100 or greater, 120 or greater or 150 or greater, from the viewpoint of satisfactorily improving the mechanical properties of the rubber composite containing the cellulose nanofibers, while using a small amount of cellulose nanofibers. The upper limit is not particularly restricted but is preferably 5000 or lower from the viewpoint of handleability.

For the present disclosure, the fiber length, fiber diameter and the LID ratio of the cellulose nanofibers are determined by preparing aqueous dispersions of the cellulose nanofibers, each aqueous dispersion being dispersed using a high-shear homogenizer (for example, an "Excel ED-7 Autohomogenizer", trade name of Nippon Seiki Co., Ltd.), under processing conditions with a rotational speed of 15,000 rpm × 5 minutes, diluting the aqueous dispersion with purified water to 0.1 to 0.5 mass%, casting this onto mica, and using each air-dried product as a measuring sample for measurement with a scanning electron microscope (SEM) or atomic force microscope (AFM). Specifically, the length (L) and diameter (D) of 100 randomly selected cellulose nanofibers are measured in an observation field with the magnification adjusted so as to observe at least 100 cellulose nanofibers, and the ratio (L/D) is calculated. The number-average value for the fiber length (L), the number-average value for the fiber diameter (D) and the number-average value for the ratio (L/D) is calculated for the cellulose nanofibers.

Alternatively, the fiber length, fiber diameter and LID ratio of cellulose nanofibers to be included in a powder, rubber composition, rubber master batch or rubber composite can be confirmed by measurement of a sample of the same, using the measuring method described above.

Yet alternatively, the fiber length, fiber diameter and LID ratio of the cellulose nanofibers to be included in a powder, rubber composition, rubber master batch or rubber composite can be confirmed by dissolving the polymer component in an organic or inorganic solvent capable of dissolving the polymer component, separating the cellulose nanofibers, thoroughly rinsing them with the solvent, and then replacing the solvent with purified water to form an aqueous dispersion, diluting the cellulose nanofiber concentration to 0.1 to 0.5 mass% with purified water, casting the dispersion onto mica, and performing measurement by the measuring method described above using the air-dried product as the measuring sample. The cellulose nanofibers are measured using 100 or more randomly selected fibers.

The degree of crystallinity of the cellulose nanofibers is preferably 55% or greater. If the degree of crystallinity is within this range, the mechanical properties (strength and dimensional stability) of the cellulose itself will be high, so that when the cellulose nanofibers are dispersed in rubber, the strength and dimensional stability of the rubber composite will also tend to be high. A more preferred lower limit for the degree of crystallinity is 60%, preferably 70% and most preferably 80%. The upper limit for the degree of crystallinity of the cellulose nanofibers is not particularly restricted, but a higher degree is preferred, with the preferred upper limit being 99% from the viewpoint of productivity.

The alkali-soluble polysaccharides such as hemicellulose and acid-insoluble components such as lignin are present between plant-derived cellulose nanofiber microfibrils and between microfibril bundles. Hemicellulose is a polysaccharide composed of sugars such as mannan and xylan, and it plays a role in hydrogen bonding with cellulose and binding together microfibrils. Lignin is a compound class with aromatic rings that is known to participate in covalent bonding with hemicellulose in plant cell walls. A large residue of impurities such as lignin in cellulose nanofibers may result in discoloration by heating during working, and therefore the degree of crystallinity of the cellulose nanofibers is preferably within the ranges specified above from the viewpoint of reducing discoloration of the rubber composite during extrusion or during shaping.

When the cellulose is type I cellulose crystals (derived from natural cellulose), the degree of crystallinity referred to here is that determined by the following formula, from the diffraction pattern (20/deg. = 10 to 30) obtained by measurement of the sample by wide-angle X-ray diffraction, based on the Segal method.

$$\text{Degree of crystallinity (\%)} = ([\text{Diffraction intensity from (200) plane with } 2\theta/\text{deg.} = 22.5] - [\text{diffraction intensity from amorphous matter with } 2\theta/\text{deg.} = 18])/[\text{diffraction intensity from (200) plane with } 2\theta/\text{deg.} = 22.5] \times 100$$

When the cellulose is type II cellulose crystals (derived from regenerated cellulose), the degree of crystallinity is determined by the following formula, from the absolute peak intensity h0 at $2\theta = 12.6°$ attributed to the (110) plane peak of the type II cellulose crystal, and the peak intensity h1 from the baseline for the plane spacing, in wide-angle X-

ray diffraction.

$$\text{Degree of crystallinity (\%)} = \text{h1/h0} \times 100$$

The known crystalline forms of cellulose include type I, type II, type III and type IV, among which type I and type II are most commonly used, whereas type III and type IV are not commonly used on an industrial scale but have been obtained on a laboratory scale. The cellulose nanofibers of the disclosure are preferably cellulose nanofibers containing type I cellulose crystals or type II cellulose crystals, for relatively high mobility in terms of structure and to obtain a molded article with a lower coefficient of linear expansion and more excellent strength and elongation when subjected to stretching or bending deformation, due to dispersion of the cellulose nanofibers in the rubber, and more preferably the cellulose nanofibers contain type I cellulose crystals and have a degree of crystallinity of 55% or higher.

The degree of polymerization of the cellulose nanofibers is preferably 100 or greater, more preferably 150 or greater, even more preferably 200 or greater, yet more preferably 300 or greater, even yet more preferably 400 or greater, and most preferably 450 or greater, and preferably 3500 or lower, more preferably 3300 or lower, even more preferably 3200 or lower, yet more preferably 3100 or lower and most preferably 3000 or lower.

The degree of polymerization of the cellulose nanofibers is preferably within this range from the viewpoint of workability and mechanical properties. The degree of polymerization is preferably not too high from the viewpoint of workability, and it is preferably not too low from the viewpoint of exhibiting mechanical properties.

The degree of polymerization of the cellulose nanofibers is the mean polymerization degree measured by a reduced relative viscosity method using a copper-ethylenediamine solution, as described in Verification Test (3) of "Japanese Pharmacopeia, 15th Edition Reference Manual (Hirokawa Shoten)".

According to one aspect, the weight-average molecular weight (Mw) of the cellulose nanofibers is 100,000 or greater and preferably 200,000 or greater. The ratio (Mw/Mn) of the weight-average molecular weight and number-average molecular weight (Mn) is 6 or lower and preferably 5.4 or lower. A higher weight-average molecular weight means a lower number of terminal groups of the cellulose molecules. Since the ratio (Mw/Mn) of the weight-average molecular weight and number-average molecular weight represents the width of the molecular weight distribution, a smaller Mw/Mn means a lower number of ends of cellulose molecules. Since the ends of the cellulose molecules are origins for thermal decomposition, it is not sufficient for the cellulose molecules of the cellulose nanofibers to merely have high weight-average molecular weight, but when a high weight-average molecular weight is combined with a more narrow width of the molecular weight distribution it becomes possible to obtain especially high heat resistance for the cellulose nanofibers, and for a rubber composition comprising the cellulose nanofibers and rubber. The weight-average molecular weight (Mw) of the cellulose nanofibers may be 600,000 or lower, or 500,000 or lower, for example, from the viewpoint of greater availability of the cellulose starting material. The ratio (Mw/Mn) of the weight-average molecular weight and number-average molecular weight (Mn) may be 1.5 or greater or 2 or greater, for example, from the viewpoint of easier production of the cellulose nanofibers. The Mw can be controlled to within this range by selecting a cellulose starting material having the corresponding Mw, or by carrying out appropriate physical treatment and/or chemical treatment of the cellulose starting material. The Mw/Mn ratio can also be controlled to within this range by selecting a cellulose starting material having the corresponding Mw/Mn ratio, or by carrying out appropriate physical treatment and/or chemical treatment of the cellulose starting material. The Mw and Mw/Mn of the cellulose starting material may be in the ranges specified above according to one aspect. Examples of physical treatment for control of both the Mw and Mw/Mn include physical treatment by application of mechanical force, such as dry grinding or wet grinding with a microfluidizer, ball mill or disk mill, for example, or impacting, shearing, sliding or abrasion with a crusher, homomixer, high-pressure homogenizer or ultrasonic device, for example, while examples of chemical treatment include digestion, bleaching, acid treatment and regenerated cellulose treatment.

The weight-average molecular weight and number-average molecular weight of the cellulose nanofibers referred to here are the values determined after dissolving the cellulose nanofibers in lithium chloride-added N,N-dimethylacetamide, and then performing gel permeation chromatography with N,N-dimethylacetamide as the solvent.

The method of controlling the degree of polymerization (i.e. mean polymerization degree) or molecular weight of the cellulose nanofibers may be hydrolysis. Hydrolysis promotes depolymerization of amorphous cellulose inside the cellulose nanofibers and lowers the mean polymerization degree. Simultaneously, hydrolysis also results in removal of impurities such as hemicellulose and lignin in addition to the aforementioned amorphous cellulose, so that the interior of the fiber material becomes porous.

The method of hydrolysis is not particularly restricted and may be acid hydrolysis, alkali hydrolysis, hot water decomposition, steam explosion, microwave decomposition or the like. Such methods may be used alone or in combinations of two or more. In a method of acid hydrolysis, for example, the cellulose starting material is α-cellulose obtained as pulp from a fibrous plant, which is dispersed in an aqueous medium, and then a suitable amount of a proton acid, carboxylic acid, Lewis acid, heteropolyacid or the like is added to the dispersion and the mixture is heated while stirring, thereby allowing easy control of the mean polymerization degree. The reaction conditions such as temperature, pressure and time will differ depending on the type of cellulose, the cellulose concentration, the acid type and the acid concentration, and they are appropriately adjusted so as to obtain the desired mean polymerization degree. For example, a water-soluble mineral acid solution at up to 2 mass% may be used for treatment of cellulose nanofibers for 10 minutes or longer under conditions of 100°C or higher under pressure. Under such conditions, the catalyst component, such as an acid, penetrates to the cellulose nanofiber interiors and promotes hydrolysis, allowing a lower amount of catalyst component usage and easier subsequent refining. During hydrolysis, the dispersion of the cellulose material may contain, in addition to water, also a small amount of an organic solvent in a range that does not interfere with the effect of the invention.

Alkali-soluble polysaccharides in the cellulose nanofibers include β-cellulose and γ-cellulose, in addition to hemicellulose. Alkali-soluble polysaccharides are understood by those skilled in the art to consist of the components that are obtained as the alkali-soluble portion of holocellulose (that is, the components other than α-cellulose in the holocellulose), upon solvent extraction and chlorine treatment of a plant (such as wood). Since alkali-soluble polysaccharides consist of hydroxyl group-containing polysaccharides with poor heat resistance, which can lead to inconveniences such as decomposition when subjected to heat, or yellowing due to heat aging, or reduced strength of the cellulose nanofibers, it is preferred to have a lower alkali-soluble polysaccharide content in the cellulose nanofibers.

According to one aspect, the average content of alkali-soluble polysaccharides in the cellulose nanofibers is preferably 20 mass% or lower, 18 mass% or lower, 15 mass% or lower or 12 mass% or lower with respect to 100 mass% of the cellulose nanofibers, from the viewpoint of obtaining satisfactory dispersibility for the cellulose nanofibers. The content may also be 1 mass% or greater, 2 mass% or greater or 3 mass% or greater from the viewpoint of facilitating production of the cellulose nanofibers.

The average content of alkali-soluble polysaccharides can be determined by the method described in non-patent literature (Mokushitsu Kagaku Jikken Manual, ed. The Japan Wood Research Society, pp.92-97, 2000), subtracting the α-cellulose content from the holocellulose content (Wise method). In the technical field this method is considered to be a method of measuring hemicellulose content. The alkali-soluble polysaccharide content is calculated 3 times for each sample, and the number average for the calculated alkali-soluble polysaccharide contents is recorded as the average alkali-soluble polysaccharide content.

According to one aspect, the average content of acid-insoluble components in the cellulose nanofibers is preferably 10 mass% or lower, 5 mass% or lower or 3 mass% or lower with respect to 100 mass% of the cellulose nanofibers, from the viewpoint of avoiding reduction in heat resistance and resulting discoloration of the cellulose nanofibers. The content may also be 0.1 mass% or greater, 0.2 mass% or greater or 0.3 mass% or greater from the viewpoint of facilitating production of the cellulose nanofibers.

The average content of the acid-insoluble component is quantified using the Klason method, described in non-patent literature (Mokushitsu Kagaku Jikken Manual, ed. The Japan Wood Research Society, pp.92-97, 2000). In the technical field this method is considered to be a method of measuring lignin content. The sample is stirred in a sulfuric acid solution to dissolve the cellulose and hemicellulose, and then filtered with glass fiber filter paper, and the obtained residue is used as the acid-insoluble component. The acid-insoluble component content is calculated from the weight of the acid-insoluble component, and the number average of the acid-insoluble component content calculated for three samples is recorded as the average content of the acid-insoluble component.

The thermal decomposition initiation temperature ($T_D$) of the cellulose nanofibers, according to one aspect, is 270°C or higher, preferably 275°C or higher, more preferably 280°C or higher and even more preferably 285°C or higher, from the viewpoint of allowing the desired heat resistance and mechanical strength to be exhibited for on-vehicle purposes. While a higher thermal decomposition initiation temperature is preferred, it is also 320°C or lower or 300°C or lower, from the viewpoint of easier production of the cellulose nanofibers.

For the purpose of the disclosure, the $T_D$ is the value determined from a graph of thermogravimetry (TG) analysis where the abscissa is temperature and the ordinate is weight retention %. Starting from the weight of cellulose nanofibers at 150°C (with essentially all of the moisture content removed) (0 wt% weight reduction) and increasing the temperature, a straight line is obtained running through the temperature at 1 wt% weight reduction ($T_{1\%}$) and the temperature at 2 wt% weight reduction ($T_{2\%}$). The temperature at the point of intersection between this straight line and a horizontal (baseline) running through the origin at weight reduction 0 wt%, is defined as $T_D$.

The 1% weight reduction temperature ($T_{1\%}$) is the temperature at 1 wt% weight reduction with the 150°C weight as the origin, after continuous temperature increase by the method for $T_D$ described above.

The 250°C weight loss ($T_{250°C}$) of the cellulose nanofibers is the weight loss by TG analysis when the cellulose nanofibers have been stored for 2 hours at 250°C under a nitrogen flow.

(Chemical modification)

The cellulose nanofibers may be chemically modified cellulose nanofibers. The cellulose nanofibers may be chemically modified beforehand, at the stage of the starting pulp or linter, during defibration treatment or after defibration treatment, or they may be chemically modified either during or after the slurry preparation step or during or after the drying (granulation) step.

The modifying agent for the cellulose nanofibers used may be a compound that reacts with the hydroxyl groups of cellulose, and it may be an esterifying agent, an etherifying agent or a silylating agent. According to a preferred aspect, the chemical modification is acylation, and especially acetylation, using an esterifying agent. Preferred esterifying agents are acid halides, acid anhydrides, vinyl carboxylate esters and carboxylic acids.

An acid halide may be one or more selected from the group consisting of compounds represented by the following formula.

$$R^1-C(=O)-X$$

(In the formula, $R^1$ represents an alkyl group of 1 to 24 carbon atoms, an alkenyl group of 2 to 24 carbon atoms, a cycloalkyl group of 3 to 24 carbon atoms or an aryl group of 6 to 24 carbon atoms, and X is Cl, Br or I.) Specific examples of acid halides include acetyl chloride, acetyl bromide, acetyl iodide, propionyl chloride, propionyl bromide, propionyl iodide, butyryl chloride, butyryl bromide, butyryl iodide, benzoyl chloride, benzoyl bromide and benzoyl iodide, with no limitation to these. Acid chlorides are preferably used among these from the viewpoint of reactivity and handleability. For reaction of an acid halide, one or more alkaline compounds may also be added to neutralize the acidic by-products while simultaneously exhibiting catalytic action. Specific examples of alkaline compounds include: tertiary amine compounds such as triethylamine and trimethylamine; and nitrogen-containing aromatic compounds such as pyridine and dimethylaminopyridine; with no limitation to these.

Any suitable acid anhydride may be used as an acid anhydride. Examples include:

anhydrides of saturated aliphatic monocarboxylic acids such as acetic acid, propionic acid, (iso)butyric acid and valeric acid;
anhydrides of unsaturated aliphatic monocarboxylic acids such as (meth)acrylic acid and oleic acid;
anhydrides of alicyclic monocarboxylic acids such as cyclohexanecarboxylic acid and tetrahydrobenzoic acid;
anhydrides of aromatic monocarboxylic acids such as benzoic acid and 4-methylbenzoic acid;
dibasic carboxylic anhydrides, for example: anhydrides of saturated aliphatic dicarboxylic acids such as succinic acid and adipic acid;
unsaturated aliphatic dicarboxylic anhydrides such as maleic anhydride and itaconic anhydride;
alicyclic dicarboxylic anhydrides such as 1-cyclohexene-1,2-dicarboxylic anhydride, hexahydrophthalic anhydride and methyltetrahydrophthalic anhydride;
aromatic dicarboxylic anhydrides such as phthalic anhydride and naphthalic anhydride; and
tribasic or greater polybasic carboxylic anhydrides, for example: polycarboxylic acid (anhydrides) such as trimellitic anhydride and pyromellitic anhydride.

The catalyst for reaction of an acid anhydride may be one or more types of an acidic compound such as sulfuric acid, hydrochloric acid or phosphoric acid, or a Lewis acid (such as a Lewis acid compound represented by MYn where M represents a metalloid element such as B, As or Ge, a base metal element such as Al, Bi or In, a transition metal element such as Ti, Zn or Cu, or a lanthanoid element, n represents an integer corresponding to the valence of M and is 2 or 3, and Y represents a halogen atom, OAc, $OCOCF_3$, $ClO_4$, $SbF_6$, $PF_6$ or $OSO_2CF_3$(OTf)), or an alkaline compound such as triethylamine or pyridine.

Preferred vinyl carboxylate esters are vinyl carboxylate esters represented by the following formula:

$$R-COO-CH=CH_2$$

{where R is an alkyl group of 1 to 24 carbon atoms, an alkenyl group of 2 to 24 carbon atoms, a cycloalkyl group of 3 to 16 carbon atoms or an aryl group of 6 to 24 carbon atoms}. Vinyl carboxylate esters are more preferably one or more selected from the group consisting of vinyl acetate, vinyl propionate, vinyl butyrate, vinyl caproate, vinyl cyclohexanecarboxylate, vinyl caprylate, vinyl caprate, vinyl laurate, vinyl myristate, vinyl palmitate, vinyl stearate, vinyl pivalate, vinyl octylate, divinyl adipate, vinyl methacrylate, vinyl crotonate, vinyl octylate, vinyl benzoate and vinyl cinnamate. For esterification reaction with a vinyl carboxylate ester, one or more catalysts selected from the group consisting of alkali metal hydroxides, alkaline earth metal hydroxides, alkali metal carbonates, alkaline earth metal carbonates, alkali metal hydrogencarbonate salts, primary to tertiary amines, quaternary ammonium salts, imidazoles and their derivatives, pyridines and their derivatives, and alkoxides, may be added.

Alkali metal hydroxides and alkaline earth metal hydroxides include sodium hydroxide, potassium hydroxide, lithium hydroxide, calcium hydroxide and barium hydroxide. Alkali metal carbonates, alkaline earth metal carbonates and alkali metal hydrogencarbonate salts include lithium carbonate, sodium carbonate, potassium carbonate, cesium carbonate, magnesium carbonate, calcium carbonate, barium carbonate, lithium hydrogencarbonate, sodium hydrogencarbonate, potassium hydrogencarbonate and cesium hydrogencarbonate.

Primary to tertiary amines are primary amines, secondary amines and tertiary amines, specific examples of which include ethylenediamine, diethylamine, proline, N,N,N',N'-tetramethylethylenediamine, N,N,N',N'-tetramethyl-1,3-propanediamine, N,N,N',N'-tetramethyl-1,6-hexanediamine, tris(3-dimethylaminopropyl)amine, N,N-dimethylcyclohexylamine and triethylamine.

Imidazole and its derivatives include 1-methylimidazole, 3-aminopropylimidazole and carbonyldiimidazole.

Pyridine and its derivatives include N,N-dimethyl-4-aminopyridine and picoline.

Alkoxides include sodium methoxide, sodium ethoxide and potassium-t-butoxide.

Carboxylic acids include one or more selected from the group consisting of compounds represented by the following formula.

R-COOH

(In the formula, R represents an alkyl group of 1 to 16 carbon atoms, an alkenyl group of 2 to 16 carbon atoms, a cycloalkyl group of 3 to 16 carbon atoms or an aryl group of 6 to 16 carbon atoms.)

Specific examples of carboxylic acids include one or more selected from the group consisting of acetic acid, propionic acid, butyric acid, caproic acid, cyclohexanecarboxylic acid, caprylic acid, capric acid, lauric acid, myristic acid, palmitic acid, stearic acid, pivalic acid, methacrylic acid, crotonic acid, octylic acid, benzoic acid and cinnamic acid.

Preferred among these carboxylic acids are one or more selected from the group consisting of acetic acid, propionic acid and butyric acid, and especially acetic acid, from the viewpoint of reaction efficiency.

The catalyst for reaction of a carboxylic acid may be one or more types of an acidic compound such as sulfuric acid, hydrochloric acid or phosphoric acid, or a Lewis acid (such as a Lewis acid compound represented by MYn where M represents a metalloid element such as B, As or Ge, a base metal element such as Al, Bi or In, a transition metal element such as Ti, Zn or Cu, or a lanthanoid element, n represents an integer corresponding to the valence of M and is 2 or 3, and Y represents a halogen atom, OAc, $OCOCF_3$, $ClO_4$, $SbF_6$, $PF_6$ or $OSO_2CF_3$(OTf)), or an alkaline compound such as triethylamine or pyridine.

Particularly preferred among these esterification reactants are one or more selected from the group consisting of acetic anhydride, propionic anhydride, butyric anhydride, vinyl acetate, vinyl propionate, vinyl butyrate and acetic acid, among which acetic anhydride and vinyl acetate are especially preferred from the viewpoint of reaction efficiency.

When the cellulose nanofibers are chemically modified (by hydrophobizing such as acylation, for example), the dispersibility of the cellulose nanofibers in the rubber will tend to be satisfactory, but the cellulose nanofibers of the disclosure can also exhibit satisfactory dispersibility in rubber even when they are unsubstituted or low-substituted. According to one aspect, the chemical modification is acylation from the viewpoint of obtaining chemically modified cellulose nanofibers with a high thermal decomposition initiation temperature. The degree of acyl substitution (DS) may be 0 or greater, and is preferably 0.1 or greater, 0.2 or greater, 0.25 or greater, 0.3 or greater or 0.5 or greater, from the viewpoint of obtaining esterified cellulose nanofibers with a high thermal decomposition initiation temperature. If unmodified cellulose backbones remain in the esterified cellulose nanofibers, then it will be possible to obtain esterified cellulose nanofibers exhibiting high tensile strength and dimensional stability provided by the cellulose and a high thermal decomposition initiation temperature provided by the chemical modification, and in this regard the degree of acyl substitution is preferably 1.7 or lower, 1.5 or lower, 1.2 or lower, 1.0 or lower, 0.8 or lower, 0.7 or lower, 0.6 or lower or 0.5 or lower.

When the modifying groups on the chemically modified cellulose nanofibers are acyl groups, the degree of acyl substitution (DS) can be calculated based on the peak intensity ratio between the acyl group-derived peak and the cellulose backbone-derived peak, in the attenuated total reflection (ATR) infrared absorption spectrum of the esterified cellulose nanofibers. The peak of the absorption band for C=O based on acyl groups appears at 1730 cm$^{-1}$, while the peak of the absorption band for C-O based on the cellulose backbone chain appears at 1030 cm$^{-1}$. The DS of esterified cellulose nanofibers can be calculated using the calibration curve:

$$\text{Degree of substitution DS} = 4.13 \times \text{IR index (1030)},$$

derived from a correlation graph drawn between DS obtained from solid NMR measurement of the esterified cellulose nanofibers described below, and the modification rate (IR index 1030), defined by the ratio of the peak intensity of the absorption band for C=O based on acyl groups with respect to the peak intensity of the absorption band for C-O of the cellulose backbone chain.

The method of determining DS of the esterified cellulose nanofibers by solid NMR may be $^{13}$C solid NMR measurement of the freeze-shattered esterified cellulose nanofibers, calculating the value by the following formula using the area intensity (Inf) of the signal attributed to one carbon atom of the modifying group, with respect to the total area intensity (Inp) of the signals attributed to C1-C6 carbons of the pyranose rings of cellulose, appearing in the range of 50 ppm to 110 ppm.

$$DS = (Inf) \times 6/(Inp)$$

For example, when the modifying group is acetyl, the signal at 23 ppm attributed to -CH$_3$ may be used.

The conditions in the $^{13}$C solid NMR measurement may be as follows, for example.

Apparatus: Bruker Biospin Avance 500WB
Frequency: 125.77 MHz
Measuring method: DD/MAS
Latency time: 75 sec
NMR sample tube: 4 mm$\varphi$
Number of scans: 640 (~14 hr)
MAS : 14,500 Hz
Chemical shift reference: glycine (external reference: 176.03 ppm)

The DS heterogeneity ratio (DSs/DSt), defined as the proportion of the degree of modification (DSs) of the fiber surfaces with respect to the degree of modification (DSt) of the chemically modified cellulose nanofibers as a whole (the same definition as for the degree of acyl substitution (DS)), is preferably 1.05 or greater. A larger value for the DS heterogeneity ratio corresponds to a more non-uniform structure similar to a sheath-core structure (that is, while the fiber surfaces are highly chemically modified, the center sections of the fibers maintain the original largely unmodified cellulose structure), which helps to provide the high tensile strength and dimensional stability of cellulose while improving the affinity with rubber during compositing with rubber, and improving the dimensional stability of the cured rubber product. The DS heterogeneity ratio is more preferably 1.1 or greater, 1.2 or greater, 1.3 or greater, 1.5 or greater or 2.0 or greater, while from the viewpoint of facilitating production of chemically modified cellulose nanofibers, it is preferably 30 or lower, 20 or lower, 10 or lower, 6 or lower, 4 or lower or 3 or lower.

The value of DSs will differ depending on the degree of modification of the esterified cellulose nanofibers, but for example, it is preferably 0.1 or greater, more preferably 0.2 or greater, even more preferably 0.3 or greater and yet more preferably 0.5 or greater, and preferably 3.0 or lower, more preferably 2.5 or lower, even more preferably 2.0 or lower, yet more preferably 1.5 or lower, especially preferably 1.2 or lower and most preferably 1.0 or lower. The preferred range for DSt is as described above for the acyl substituent (DS).

A smaller coefficient of variation (CV) for the DS heterogeneity ratio of the chemically modified cellulose nanofibers is preferred for lower variation in the physical properties of the rubber composite. The coefficient of variation is preferably 50% or lower, 40% or lower, 30% or lower or 20% or lower. The coefficient of variation may be lowered, for example, by a method of chemical modification after defibration of the cellulose starting material to obtain chemically modified cellulose nanofibers (sequential method), while it may be raised by a method of simultaneous defibration and chemical modification of the cellulose starting material (simultaneous method). While the action mechanism for this is not completely understood, it is believed that in the simultaneous method, chemical modification proceeds further with the narrow fibers that are initially formed by defibrating, while reduction in hydrogen bonding between the cellulose microfibrils due to the chemical modification results in further defibration and leads to a larger coefficient of variation of the DS heterogeneity ratio.

The coefficient of variation (CV) of the DS heterogeneity ratio can be obtained by sampling 100 g of the aqueous dispersion of the chemically modified cellulose nanofibers (solid content: ≥10 mass%), using 10 g each of the freeze-shattered substance as measuring samples, calculating the DS heterogeneity ratio from DSt and DSs for the 10 samples, and calculating by the following formula from the standard deviation (σ) and arithmetic mean (μ) of the DS heterogeneity ratio between the 10 samples.

$$\text{Coefficient of variation (\%) in DS heterogeneity ratio (DSs/DSt)} = \text{Standard deviation}$$
$$\sigma/\text{arithmetic mean } \mu \times 100j$$

The method of calculating DSs is as follows. Specifically, powdered esterified cellulose nanofibers obtained by freeze-pulverizing are placed on a 2.5 mm$\varphi$ dish-shaped sample stand and the surface is pressed flat and measured by X-ray photoelectron spectroscopy (XPS). The XPS spectrum reflects the structural elements and chemically bonded state of the sample surface layer alone (typically about several nanometers). The obtained C1s spectrum is analyzed by peak separation, and calculation is performed by the following formula using the area intensity (Ixf) of the peak attributed to one carbon atom of the modifying group, with respect to the area intensity (Ixp) of the peak attributed to the C2-C6 carbons of the pyranose rings of cellulose (289 eV, C-C bond).

$$DSs = (Ixf) \times 5/(Ixp)$$

For example, when the modifying group is acetyl, the C1s spectrum is analyzed by peak separation at 285 eV, 286 eV, 288 eV and 289 eV, and the peak at 289 eV may be used for Ixp while the peak due to acetyl group O-C=O bonds (286 eV) may be used for Ixf.

The conditions for XPS measurement are the following, for example.

Device: VersaProbe II by Ulvac-Phi, Inc.
Excitation source: mono. AlK$\alpha$ 15 kV $\times$ 3.33 mA
Analysis size: ~200 $\mu$m$\varphi$
Photoelectron take-off angle: 45°
Capture range
Narrow scan: C 1s, O 1s
Pass Energy: 23.5 eV

The content of cellulose nanofibers in the rubber composition is preferably 0.5 mass% or greater, 5 mass% or greater or 10 mass% or greater from the viewpoint of obtaining a satisfactory reinforcing effect by the cellulose nanofibers, and is preferably 50 mass% or lower, 45 mass% or lower or 40 mass% or lower, from the viewpoint of obtaining a rubber composition with satisfactory rubber elasticity.

<Nonionic surfactant>

The composition of the embodiment includes a nonionic surfactant. According to one aspect, the nonionic surfactant has an aliphatic or aromatic group of 6 to 30 carbon atoms, or a combination thereof as the hydrophobic portion. The cellulose nanofibers of the embodiment typically form loose aggregates, but a nonionic surfactant has satisfactory affinity with rubber components due to the contribution of the carbon chains in the hydrophobic portion, while being able to easily infiltrate into the voids of the cellulose nanofiber aggregates, since the carbon chains of the hydrophobic portion are not excessively long, and can thus render the aggregates porous. For example, if a nonionic surfactant is allowed to infiltrate the aggregates in a wetted state and then dried to form a dried body, it is possible to reduce shrinkage during drying compared to a dried body obtained by drying aggregates without using a nonionic surfactant, thus allowing the cellulose nanofibers to be satisfactorily dispersed when the dried body is combined with a rubber component.

The aliphatic groups may be linear or alicyclic groups, or combinations thereof. According to one aspect, the number of carbon atoms in the aliphatic or aromatic group or combination thereof is 6 or more, 8 or more or 10 or more from the viewpoint of obtaining satisfactory dispersibility of the cellulose nanofibers in the rubber component, and according to another aspect it is 30 or less, 25 or less or 20 or less from the viewpoint of infiltration into the voids of the cellulose nanofiber aggregates.

The nonionic surfactant preferably has one or more structures selected from the group consisting of oxyethylene, glycerol and sorbitan as hydrophilic portions (specifically, a repeating structure having one or more of these as repeating units). These structures are preferred because they exhibit high hydrophilic properties while allowing different types of nonionic surfactants to be easily obtained by combination of different hydrophobic portions. In a nonionic surfactant having such a hydrophilic portion, the number of carbon atoms n in the hydrophobic portion and the number of repeating units m in the hydrophilic portion preferably satisfy the relationship $n > m$, from the viewpoint of obtaining satisfactory dispersibility of the cellulose nanofibers in the rubber component. The number of repeats m of the hydrophilic portion is preferably one or greater, 2 or greater, 3 or greater or 5 or greater from the viewpoint of satisfactory infiltration of the nonionic surfactant into the voids of the cellulose nanofiber aggregates, and preferably 30 or less, 25 or less, 20 or less or 18 or less, from the viewpoint of obtaining satisfactory dispersibility of the cellulose nanofibers in the rubber component.

The nonionic surfactant is preferably one or more selected from the group consisting of compounds represented by the following general formula (1):

$$R\text{-}(OCH_2CH_2)_m\text{-}OH \qquad (1)$$

[where R represents an aliphatic or aromatic group of 6 to 30 carbon atoms, or a combination thereof, and m is a natural number smaller than the number of carbon atoms of R], and compounds represented by the following general formula (2):

$$R_1OCH_2\text{-}(CHOH)_4\text{-}CH_2OR_2 \qquad (2)$$

[where $R_1$ and $R_2$ each independently represent a hydrogen atom, an aliphatic or aromatic group of 1 to 30 carbon atoms or a combination thereof, $-COR_3$ {where $R_3$ represents an aliphatic or aromatic group of 1 to 30 carbon atoms or a combination thereof}, or $-(CH_2CH_2O)_y\text{-}R_4$ {where $R_4$ represents a hydrogen atom or an aliphatic or aromatic group of 1 to 30 carbon atoms or a combination thereof, and y is an integer of 1 to 30}].

In general formula (1), R corresponds to the hydrophobic portion, and ($OCH_2CH_2$) (i.e. an oxyethylene unit) corresponds to the hydrophilic portion. The number of carbon atoms of R and the number of repeats m of ($OCH_2CH_2$) are preferably within the same respective ranges specified above for the number of carbon atoms n of the hydrophobic portion and the number of repeats m of the hydrophilic portion.

In general formula (2), the number of carbon atoms of the aliphatic or aromatic group of 1 to 30 carbon atoms or a combination thereof, for each of $R_1$, $R_2$, $R_3$ and $R_4$, is preferably 6 or more, 8 or more or 10 or more and preferably 24 or less, 20 or less or 18 or less.

It may also be 1 or greater, and preferably 2 or greater or 4 or greater and preferably 30 or smaller, 25 or smaller or 20 or smaller.

Preferred examples of hydrophobic functional groups for the nonionic surfactant include octyl, nonyl, decyl, isodecyl, lauryl, myristoyl, palmitoyl, stearyl, isostearyl, oleyl, linol, linolene, ricinol, 2-ethylhexyl, phenyl, benzyl, naphthyl, tolyl, trityl, styryl, octylphenyl, nonylphenyl or dodecylphenyl groups; ether-derived groups such as bisphenol A and bisphenol F; and castor oil or hydrogenated castor oil ether-derived groups.

<First rubber component>

The first rubber component (hereunder also referred to simply as "rubber component") may be natural rubber, a conjugated diene-based polymer, or a hydrogenated product of the same. The polymer or its hydrogenated product may also be an oligomer.

According to one aspect, the rubber component is unvulcanized (uncured) rubber, which is cured during vulcanization of the rubber composition. The rubber component may be present in a flowable manner in the rubber composition, as liquid rubber or rubber latex particles, or dissolved in a solvent in the rubber composition, or as rubber obtained by solution polymerization. The solvent may be normal-hexane, for example.

According to one aspect, the number-average molecular weight (Mn) of the rubber component is 1,000 to 2,000,000, selected depending on the purpose of the cured rubber product and on the type of rubber. According to one aspect, the number-average molecular weight (Mn) of the rubber component is preferably 100,000 or higher, 150,000 or higher or 200,000 or higher, from the viewpoint of obtaining a rubber composite with a particularly excellent storage modulus, and it is preferably 2,000,000 or lower, 1,500,000 or lower, 1,000,000 or lower, 800,000 or lower, 750,000 or lower, 700,000 or lower or 600,000 or lower, from the viewpoint of facilitating dispersion of the cellulose nanofibers in the rubber component and obtaining satisfactory rubber elasticity without excessive hardening of the rubber component after curing.

According to another aspect, when the rubber component is a copolymer of ethylene and one or more α-olefins of 3 to 20 carbon atoms, the molecular weight of the rubber component may be in a relatively low range, such as 10,000 or higher for example, and is preferably 10,000 to 100,000.

According to yet another aspect, when the rubber component used is liquid rubber, for example, the number-average molecular weight (Mn) of the rubber component may be in the range specified below for the liquid rubber, such as 1,000 to 50,000.

For the purpose of the disclosure, the molecular weight and molecular weight distribution of the rubber component are values obtained by measuring the chromatogram by gel permeation chromatography with 3 linked columns packed with polystyrene gel, and performing calculation with a calibration curve using standard polystyrene. The solvent used is tetrahydrofuran.

[Monomer composition of rubber component]

(Conjugated diene-based polymer)

The conjugated diene-based polymer may be a homopolymer or a copolymer of two or more conjugated diene monomers or a copolymer of a conjugated diene monomer and another monomer. The copolymer may be either random or block.

Conjugated diene monomers include 1,3-butadiene, isoprene, piperylene, 2,3-dimethyl-1,3-butadiene, 1,3-pentadiene, 3-methyl-1,3-pentadiene, 1,3-heptadiene and 1,3-hexadiene, and one of these or a combination of two or more may be used. Butadiene, isoprene and their combinations are preferred, with butadiene being especially preferred.

According to one aspect, the conjugated diene-based polymer is a copolymer of a conjugated diene monomer and an aromatic vinyl monomer.

Aromatic vinyl monomers are not particularly restricted so long as they are monomers that are copolymerizable with conjugated diene monomers, and examples include styrene, *m*- or *p*-methylstyrene, α-methylstyrene, ethylstyrene, *p-tert*-butylstyrene, vinylethylbenzene, vinylxylene, vinylnaphthalene, diphenylethylene and divinylbenzene, among which any one or combination of two or more may be used. Styrene is preferred from the viewpoint of molding workability of the rubber composition and impact resistance of the cured rubber product.

Random copolymers include butadiene-isoprene random copolymer, butadiene-styrene random copolymer, styrene-butadiene-styrene copolymer, styrene-butadiene-butadiene-styrene copolymer, styrene-ethylene-butadiene-styrene copolymer, isoprene-styrene random copolymer and butadiene-isoprene-styrene random copolymer. The compositional distribution of each monomer in the copolymer chain may be a completely random copolymer having a nearly statistically random composition, or a tapered (gradient) random copolymer having a gradient in the compositional distribution. A composition with a conjugated diene-based polymer bond form, i.e. 1,4-bonds or 1,2-bonds, may have uniform or different molecules.

The block copolymer may be a copolymer composed of two or more blocks, and for example, it may be a block copolymer having the same monomer composition as described above for a random copolymer. An example is a block copolymer in which block A as an aromatic vinyl monomer and block B as a conjugated diene monomer block and/or an aromatic vinyl monomer and conjugated diene monomer copolymer block, form the structure A-B, A-B-A or A-B-A-B. There is no essential need for distinct block borders, and for example, when block B is a copolymer of an aromatic vinyl monomer and a conjugated diene monomer, the aromatic vinyl monomer in block B may be distributed in a uniform or tapered manner. Block B may also have multiple regions including portions where the aromatic vinyl monomer is uniformly distributed and/or portions where it is distributed in a tapered manner. Block B may also have multiple segments with different aromatic vinyl monomer contents. When multiple blocks for each of block A and block B are present in a copolymer, their molecular weights and compositions may be the same or different.

The mass ratio of the aromatic vinyl compound units and conjugated diene compound units in the block copolymer is preferably 10/90 to 70/30. It is more preferably 15/85 to 55/45, and most preferably 20/80 to 45/55. Two or more copolymers with different mass ratios between the aromatic vinyl compound and conjugated diene compound may also be used as a blend. Specific examples of aromatic vinyl compounds include styrene, α-methylstyrene and vinyltoluene, any one or more of which may be selected for use, with styrene being especially preferred.

The block copolymer may also be a mixture of two or more different types with differences in any one from among the bond form, the molecular weight, the aromatic vinyl compound type, the conjugated diene compound type, the 1,2-vinyl group content or total 1,2-vinyl group content and 3,4-vinyl group content, the aromatic vinyl compound content and the hydrogenation rate.

(Hydrogenated rubber)

A conjugated diene-based polymer may be partially hydrogenated or fully hydrogenated. From the viewpoint of inhibiting heat degradation during processing, the hydrogenation rate of the hydrogenated product is preferably 50% or greater, 80% or greater or 98% or greater, and from the viewpoint of low-temperature toughness it is preferably 50% or lower, 20% or lower or 0% (i.e. non-hydrogenated).

The amount of vinyl bonds (for example, butadiene 1,2- or 3,4-bonds) in the conjugated diene bond unit of a conjugated diene-based polymer is preferably 5 mol% or greater, 10 mol% or greater, 13 mol% or greater or 15 mol% or greater, and preferably 80 mol% or lower, 75 mol% or lower, 65 mol% or lower, 50 mol% or lower or 40 mol% or lower, from the viewpoint of inhibiting crystallization of the soft segments.

The amount of vinyl bonds (for example, butadiene 1,2-bonds) among the conjugated diene bond units can be determined by $^{13}$C-NMR (quantitative mode). Specifically, integration of the peak area obtained by $^{13}$C-NMR gives a value proportional to the amount of carbon in each structural unit, which can then be converted to mass% for each structural unit.

Styrene: 145 to 147 ppm
Vinyl: 110 to 116 ppm
Diene (*cis*) 24 to 28 ppm
Diene (*trans*) 29 to 33 ppm

In a copolymer of a conjugated diene monomer and an aromatic vinyl monomer, the amount of aromatic vinyl monomers bonded to conjugated diene monomers (for the purpose of the present disclosure this is also the aromatic vinyl bond amount), is preferably 5.0 mass% to 70 mass% and more preferably 10 mass% to 50 mass%, with respect to the total mass of the conjugated diene-based polymer. The aromatic vinyl bond amount can be calculated from the ultraviolet absorbance of phenyl groups, and this can be used to further calculate the conjugated diene binding amount.

A hydrogenated conjugated diene-based polymer may be a hydrogenated form of any of the conjugated diene-based polymers mentioned above, and for example, it may be a hydrogenated butadiene homopolymer, isoprene homopolymer, styrene-butadiene copolymer or acrylonitrile-butadiene copolymer.

(Modified rubber)

The second rubber component may be modified rubber, and for example, modifying groups such as epoxy, acid anhydride, carboxy, aldehyde, hydroxyl, alkoxy, amino, amide, imide, nitro, isocyanate or mercapto groups may be introduced into any of the examples of conjugated diene-based polymers mentioned above. Examples of modified rubber include epoxy-modified natural rubber, epoxy-modified butadiene rubber, epoxy-modified styrene-butadiene rubber, carboxy-modified natural rubber, carboxy-modified butadiene rubber, carboxy-modified styrene-butadiene rubber, acid anhydride-modified natural rubber, acid anhydride-modified butadiene rubber and acid anhydride-modified styrene-butadiene rubber.

The amount of modifying groups per 100 mol% of the total monomer unit is preferably 0.1 mol% or greater, 0.2 mol% or greater or 0.3 mol% or greater and preferably 5 mol% or lower or 3 mol% or lower, from the viewpoint of affinity between the cellulose nanofibers and the rubber component. The amount of modifying groups can be confirmed by FT-IR (Fourier Transform Infrared Spectroscopy), solid NMR (Nuclear Magnetic Resonance), solution NMR, or a method of combining the previously specified monomer composition with quantitation by elemental analysis of the elements not present in the unmodified rubber, and calculating the molar ratio of modifying groups.

The first rubber component preferably includes one or more selected from the group consisting of styrene-butadiene rubber, butadiene rubber, isoprene rubber, natural rubber, chloroprene rubber, acrylonitrile-butadiene rubber, butyl rubber, chlorinated butyl rubber, brominated butyl rubber and ethylene-propylene diene rubber, as well as their derivatives, and more preferably it includes one or more selected from the group consisting of styrene-butadiene rubber, butadiene rubber and isoprene rubber, as well as their derivatives. According to one aspect, the derivatives are hydrogenated rubber or modified rubber.

[First rubber component form]

According to one aspect, the first rubber component is liquid rubber and/or rubber latex particles. According to another aspect, the first rubber component may be rubber latex particles obtained by emulsion polymerization, or rubber obtained by solution polymerization, or a combination thereof.

(Liquid rubber)

For the purpose of the disclosure, "liquid rubber" is a substance having a flow property at 23°C and forming a rubber elastomer by crosslinking (more specifically, vulcanization) and/or chain extension. The "flow property" means, according to one aspect, that when the liquid rubber that has been dissolved in cyclohexane is placed in a vial with dimensions of 21 mm torso diameter × 50 mm full length at 23°C and then dried, causing the liquid rubber to fill the vial up to a height of 1 mm, and the vial is then closed shut, vertically inverted and allowed to stand for 24 hours, the substance can be observed to move at least 0.1 mm in the height direction. Liquid rubber may have any of the monomer compositions mentioned as examples for the rubber component, and it exhibits a liquid form at relatively low molecular weight. The liquid rubber may have reactive groups at both ends or on the main chain (for example, one or more selected from the group consisting of hydroxyl, acid anhydride, carboxy, isocyanato, thio, amino and halo groups), in which case it may be bifunctional. The reactive groups contribute to crosslinking and/or chain extension of the liquid rubber.

According to a preferred aspect, the liquid rubber includes one or more selected from the group consisting of styrene-butadiene rubber, butadiene rubber and isoprene rubber, as well as their derivatives.

The number-average molecular weight of the liquid rubber (Mn) is preferably 1,000 or higher, 1,500 or higher or 2,000 or higher from the viewpoint of obtaining a rubber composite with an excellent storage modulus, and preferably 80,000 or lower, 50,000 or lower, 40,000 or lower, 30,000 or lower or 10,000 or lower from the viewpoint of exhibiting a high flow property suited for satisfactory dispersion of the cellulose nanofibers in the liquid rubber, and from the viewpoint of avoiding excessive hardening of the liquid rubber after curing and obtaining satisfactory rubber elasticity.

From the viewpoint of satisfactorily dispersing the cellulose nanofibers in the liquid rubber, the viscosity of the liquid rubber at 25°C is preferably 1,000,000 mPa•s or lower, 500,000 mPa•s or lower or 200,000 mPa•s or lower, while from the viewpoint of obtaining a rubber composite with excellent physical properties (and especially storage modulus), it is preferably 100 mPa•s or higher, 300 mPa•s or higher or 500 mPa•s or higher.

The viscosity of the liquid rubber is the value measured using a Brookfield viscometer with a rotational speed of 10 rpm.

The content of liquid rubber in the rubber composition is preferably 0.1 mass% or greater, 1 mass% or greater or 2 mass% or greater, from the viewpoint of satisfactorily obtaining the advantages of the liquid rubber, and preferably 80 mass% or lower, 60 mass% or lower or 40 mass% or lower, from the viewpoint of satisfactorily obtaining the advantages of other components (such as cellulose nanofibers or rubber latex particles) by their addition in suitable amounts.

(Rubber latex particles)

A rubber composition that includes rubber latex particles may be a simple mixture of rubber latex (i.e. a colloidal aqueous dispersion of rubber particles) and the other constituent components in the rubber composition, and for example, it may have the solid concentration adjusted by removal of all or part of the water from the mixture. When the water is totally removed, the rubber composition includes none of the water from the latex, but the rubber latex particles of the disclosure encompasses not only such rubber particles but also any rubber particles that are dispersed in a fluid in the rubber composition (such as in liquid rubber).

The polymer composing the rubber latex particles may have any of the monomer compositions mentioned above for the rubber component. Cellulose nanofibers typically form loose aggregates, whereas rubber latex particles exist as dispersed particles in the rubber composition and tend to easily infiltrate into the voids of the cellulose nanofiber aggregates. When rubber latex particles infiltrate into the voids in cellulose nanofiber aggregates that have been rendered porous due to the nonionic surfactant, the cellulose nanofibers become satisfactorily dispersed in the rubber, thus further improving the physical properties of the rubber composite.

When liquid rubber and rubber latex particles are used in combination, they may be of the same type or different types of polymers. If they are the same type of polymer, then the monomers composing the polymer are of the same type. If the liquid rubber and rubber latex particles are of the same type of polymer, then their mutual affinity will be highly satisfactory, resulting in satisfactory dispersion of the cellulose nanofibers and facilitating production of a uniform rubber composite. Unlike liquid rubber, however, rubber latex particles are solid at 25°C. Therefore when the liquid rubber and the rubber latex particles are of the same type of polymer, the rubber latex particles will typically be of higher molecular weight than the liquid rubber.

According to one aspect, the polymer composing the rubber latex particles includes one or more selected from the group consisting of styrene-butadiene rubber, butadiene rubber, isoprene rubber, natural rubber, chloroprene rubber, acrylonitrile-butadiene rubber, butyl rubber, chlorinated butyl rubber, brominated butyl rubber and ethylene-propylene diene rubber, as well as their derivatives, and preferably it includes one or more selected from the group consisting of styrene-butadiene rubber, butadiene rubber and isoprene rubber, as well as their derivatives.

From the viewpoint of obtaining a cured rubber product with an excellent storage modulus and excellent dispersibility of the cellulose nanofibers, preferably both the liquid rubber and the rubber latex particles are styrene-butadiene rubber.

The rubber latex particles may be crosslinked when the rubber composition is cured to form the cured rubber product, or they may be a crosslinked product. When the rubber latex particles are a crosslinked product, curing during production of the cured rubber product may be solidification by removal of the medium.

When the rubber latex particles are a crosslinked product, the toluene-insoluble portion of the polymer composing the rubber latex particles preferably constitutes 1 mass% or greater from the viewpoint of obtaining a rubber composite with an excellent storage modulus, and it preferably constitutes 99 mass% or lower or 98 mass% or lower from the viewpoint of exhibiting satisfactory rubber elasticity without excessive hardening of the cured rubber product.

The particle size of the rubber latex particles may be 5 nm to 10,000 nm, according to one aspect. The particle size is the number-mean particle size measured by the light scattering method using a particle size measuring device (MICROTRACMUPA 150 by Leed & Northrup).

According to an aspect in which liquid rubber and rubber latex particles are used in combination, the proportion of the mass of the rubber latex particles with respect to the total mass of the liquid rubber and rubber latex particles in the rubber composition is preferably 1 mass% or greater, 3 mass% or greater or 4 mass% or greater, from the viewpoint of satisfactorily obtaining the advantages of the rubber latex particles, and preferably 99 mass% or lower, 95 mass% or lower or 90 mass% or lower, from the viewpoint of satisfactorily controlling the physical properties of the rubber composite by the liquid rubber.

The content of the rubber latex particle-derived rubber component in the rubber composition is preferably 1 mass% or greater or 2 mass% or greater, from the viewpoint of satisfactorily obtaining the advantages of the rubber latex particles, and preferably 50 mass% or lower, 40 mass% or lower or 30 mass% or lower, from the viewpoint of satisfactorily obtaining the advantages of other components (such as cellulose nanofibers) by their addition in suitable amounts.

The rubber latex particles are added to the rubber composition by mixing the rubber latex with the other constituent components of the rubber composition to prepare a rubber composition. The rubber latex includes rubber particles and water, and may optionally include an emulsifying agent (which may be an anionic emulsifier such as sodium dodecylbenzenesulfonate or a nonionic emulsifier such as a polyoxyethylene alkyl ether). The content of the rubber particles in the rubber latex is preferably 1 mass% or greater, 5 mass% or greater or 10 mass% or greater, and preferably 60 mass% or lower, 57 mass% or lower or 55 mass% or lower.

When rubber latex particles are used, the rubber composition includes at least water derived from the rubber latex. The water content in the rubber composition may be 0.01 mass% or greater, 0.1 mass% or greater or 1 mass% or greater, according to one aspect, and 20 mass% or lower, 15 mass% or lower or 10 mass% or lower, according to another aspect.

(Thermoplastic elastomer)

According to one aspect, the first rubber component may include a thermoplastic elastomer or it may be a thermoplastic elastomer. Throughout the disclosure, according to one aspect, "elastomer" means a substance (specifically, a natural or synthetic polymer substance) that is an elastic solid at room temperature (23°C). According to another aspect, "elastic solid" means that the storage modulus at 23°C, 10 Hz, measured based on dynamic viscoelasticity, is 1 MPa to 100 MPa. The thermoplastic elastomer may be a conjugated diene-based polymer, or according to one aspect it may be a crosslinked product. The preferred monomer composition of the thermoplastic elastomer may be the same as mentioned above under (Conjugated diene-based polymer).

The number-average molecular weight (Mn) of the thermoplastic elastomer is preferably 50,000 to 500,000 from the viewpoint of both impact strength and flow property.

The thermoplastic elastomer may also have a core-shell structure. Elastomers having a core-shell structure include core-shell type elastomers having a core of particulate rubber and a shell of a glassy graft layer formed around the exterior of the core. The core is preferably butadiene-based rubber, acrylic rubber or silicone-acrylic composite rubber. A vitreous polymer such as styrene resin, acrylonitrile-styrene copolymer or acrylic resin is suitable for the shell.

The thermoplastic elastomer is preferably at least one type selected from the group consisting of styrene-butadiene block copolymer, styrene-ethylene-butadiene block copolymer, styrene-ethylene-butylene block copolymer, styrene-butadiene-butylene block copolymer, styrene-isoprene block copolymer, styrene-ethylene-propylene block copolymer, styrene-isobutylene block copolymer, hydrogenated styrene-butadiene block copolymer, hydrogenated styrene-ethylene-butadiene block copolymer, hydrogenated styrene-butadiene-butylene block copolymer, hydrogenated styrene-isoprene block copolymer and styrene homopolymer (polystyrene), and more preferably it is at least one type selected from the group consisting of styrene-butadiene block copolymer, hydrogenated styrene-butadiene block copolymer and polystyrene.

According to one aspect, at least a portion of the thermoplastic elastomer may have an acidic functional group. That the thermoplastic elastomer has an acidic functional group, for the purpose of the disclosure, means that an acidic functional group has been added via chemical bonding into the molecular skeleton of the elastomer. An "acidic functional group", for the purpose of the disclosure, means a functional group that can react with a basic functional group, and specific examples include hydroxyl, carboxyl, carboxylate, sulfo and acid anhydride groups.

The amount of the acidic functional group added to the elastomer is preferably 0.01 mass% or greater, more preferably 0.1 mass% or greater and even more preferably 0.2 mass% or greater, and preferably 5 mass% or lower, more preferably 3 mass% or lower and even more preferably 2 mass% or lower, based on 100 mass% of the elastomer, from the viewpoint of affinity between the cellulose nanofibers and the elastomer component. The number of acidic functional groups is the value obtained by measuring the sample against a calibration curve drawn using the characteristic absorption band for the acid, after measuring a calibration sample premixed with the acidic substance using an infrared absorption spectrometer.

Elastomers with acidic functional groups include elastomers having a core-shell structure wherein the shell is a layer formed using a copolymerizing component such as acrylic acid, and elastomers which are modified by grafting $\alpha,\beta$-unsaturated dicarboxylic acids or their derivatives onto ethylene-$\alpha$-olefin copolymers, polyolefins, aromatic compound-conjugated diene copolymers or hydrogenated aromatic compound-conjugated diene copolymers that include acrylic acid as a monomer, either in the presence or in the absence of a peroxide.

According to a preferred aspect, the elastomer is an acid anhydride-modified elastomer.

More preferred among these are modified forms with $\alpha,\beta$-unsaturated dicarboxylic acids or their derivatives grafted onto polyolefins, aromatic compound-conjugated diene copolymers or hydrogenated aromatic compound-conjugated diene copolymers, either in the presence or in the absence of a peroxide, and particularly preferred are modified forms with $\alpha,\beta$-unsaturated dicarboxylic acids or their derivatives grafted onto ethylene-$\alpha$-olefin copolymers or hydrogenated aromatic compound-conjugated diene block copolymers, either in the presence or in the absence of a peroxide.

Specific examples of $\alpha,\beta$-unsaturated dicarboxylic acids and their derivatives include maleic acid, fumaric acid, maleic anhydride and fumaric anhydride, with maleic anhydride being particularly preferred.

According to one aspect, the elastomer may be a mixture of an elastomer with an acidic functional group and an elastomer without an acidic functional group. The mixing ratio of the elastomer with an acidic functional group and the elastomer without an acidic functional group is preferably 10 mass% or greater, more preferably 20 mass% or greater, even more preferably 30 mass% or greater and most preferably 40 mass% or greater, where 100 mass% is the total of both, from the viewpoint of satisfactorily maintaining high toughness and stable physical properties for the rubber composite by the elastomer with an acidic functional group. There is no particular upper limit, and essentially all of the elastomer may be an elastomer with an acidic functional group, but from the viewpoint of avoiding flow property issues it is preferably 80 mass% or lower.

[Vulcanizing agent and vulcanization accelerator]

When the rubber component in the rubber composition is uncured, the rubber composition will typically include a vulcanizing agent, and optionally also a vulcanization accelerator. The vulcanizing agent and vulcanization accelerator may be appropriately selected from among conventional publicly known compounds, depending on the type of uncured rubber in the rubber composition. The vulcanizing agent used may be an organic peroxide, an azo compound, an oxime compound, a nitroso compound, a polyamine compound, sulfur or a sulfur compound. Sulfur compounds include sulfur monochloride, sulfur dichloride, disulfide compounds and polymer polysulfur compounds. The amount of vulcanizing agent is preferably 0.01 parts by mass to 20 parts by mass or 0.1 part by mass to 15 parts by mass, with respect to 100 parts by mass of the uncured rubber in the rubber composition.

The vulcanization accelerator may be a sulfenamide-based, guanidine-based, thiuram-based, aldehyde-amine-based, aldehyde-ammonia-based, thiazole-based, thiourea-based or dithiocarbamate-based vulcanization accelerator. Zinc oxide or stearic acid may also be used as vulcanizing aids. The amount of vulcanization accelerator is preferably 0.01 parts by mass to 20 parts by mass or 0.1 part by mass to 15 parts by mass with respect to 100 parts by mass of the uncured rubber in the rubber composition.

[Rubber additives]

The rubber composition may also include conventional publicly known rubber additives (such as stabilizers, softening agents and aging inhibitors). Rubber stabilizers may be one or more antioxidants such as 2,6-di-*tert*-butyl-4-hydroxytoluene (BHT), *n*-octadecyl-3-(4'-hydroxy-3',5'-di-*tert*-butylphenyl)propionate or 2-methyl-4,6-bis[(octylthio)methyl]phenol. Rubber softening agents may be one or more process oils or extender oils. However, since the rubber composition of the embodiment can form a flexible cured rubber product according to one aspect, it preferably does not include a rubber softening agent, according to that aspect.

[Additional components]

The rubber composition may further include additional components as necessary, for improved performance. Additional components include dispersing agents, organic or inorganic fillers, heat stabilizers, antioxidants, antistatic agents and coloring agents. The content ratio of optional additional components in the rubber composition is appropriately selected in a range that does not interfere with the desired effect of the invention, and for example, it may be 0.01 mass% to 50 mass% or 0.1 mass% to 30 mass%.

According to a preferred aspect, the rubber composition includes the cellulose nanofibers at preferably 0.5 mass% to 10 mass%, 2 mass% to 8 mass% or 4 mass% to 6 mass%, and includes the nonionic surfactant having an aliphatic or aromatic group of 6 to 30 carbon atoms, or a combination thereof, as a hydrophobic portion, at preferably 10 parts by mass to 50 parts by mass, 15 parts by mass to 45 parts by mass or 20 parts by mass to 40 parts by mass, and the rubber component at preferably 85 mass% to 99.45 mass%, 88 mass% to 96.45 mass% or 90 mass% to 94.45 mass%, with respect to 100 parts by mass of the cellulose nanofibers.

<Production of cellulose/surfactant composition and rubber composition>

The method for producing the cellulose/surfactant composition and rubber composition is not particularly restricted. The components used to form the cellulose/surfactant composition or rubber composition may be mixed by stirring means such as a rotating/revolving mixer, planetary mixer, homogenizer, homogenizer, propeller-type stirrer, rotary stirrer, electromagnetic stirrer, open roll, Banbury mixer, single-screw extruder or twin-screw extruder, to obtain a cellulose/surfactant composition or rubber composition. The stirring may be carried out with heating for efficient shearing. Mixing with a homogenizer is preferred from the viewpoint of applying high shearing force and pressure to promote dispersion. The order of addition of the components during mixing is not restricted, and for production of a rubber composition, for example, there may be mentioned:

> (1) a method of simultaneously adding and mixing the cellulose nanofibers, the nonionic surfactant, the rubber component and optionally other components, and
> (2) a method including a first mixing step in which the cellulose nanofibers and the nonionic surfactant are mixed (premixing of the components other than the rubber component, according to one aspect) to obtain a first mixture as a pre-mixture, and a second mixing step in which the first mixture (pre-mixture) and the first rubber component are mixed to obtain a second mixture.

In method (2), the first mixing step may be followed by an additional step of drying the first mixture. The second mixing step may also be followed by an additional step of drying the second mixture. Drying after the second mixing step may be particularly useful when the first rubber component is liquid rubber. For example, by using liquid rubber and rubber latex particles as the first rubber component and mixing cellulose nanofibers and the nonionic surfactant in the first mixing step, the nonionic surfactant is caused to infiltrate into the voids of the cellulose nanofiber aggregates, after which the first rubber component may be added and mixed in the second mixing step to cause the first rubber component to infiltrate into the voids, optionally with drying.

<Powder>

<Powder according to first aspect>

One aspect of the disclosure provides powder composed of the composition of the disclosure (a cellulose/surfactant composition or a rubber composition, according to one aspect). The powder may have one or more of the properties mentioned below. If the powder has excellent processing properties, the cellulose nanofibers will be able to exhibit an excellent dispersed state in the rubber.

[Loose bulk density]

According to one aspect, the loose bulk density of the powder is preferably 0.01 $g/cm^3$ or greater, 0.05 $g/cm^3$ or greater, 0.10 $g/cm^3$ or greater, 0.15 $g/cm^3$ or greater, 0.20 $g/cm^3$ or greater, 0.25 $g/cm^3$ or greater, 0.30 $g/cm^3$ or greater, 0.35 $g/cm^3$ or greater, 0.40 $g/cm^3$ or greater, 0.45 $g/cm^3$ or greater or 0.50 $g/cm^3$ or greater, from the viewpoint of a satisfactory flow property and excellent feedability of the powder into the twin-screw extruder, and from the viewpoint of inhibiting migration of the nonionic surfactant into the rubber, and it is preferably 0.85 $g/cm^3$ or lower, 0.80 $g/cm^3$ or lower or 0.75 $g/cm^3$ or lower, from the viewpoint of easily disintegrating the powder in the rubber so that the cellulose nanofibers can satisfactorily disperse in the rubber, and from the viewpoint of avoiding excessive powder heaviness and reducing mixing defects with the powder and rubber.

[Compacted bulk density]

The compacted bulk density of the powder is controlled within a range that is useful for keeping the loose bulk density and degree of compaction within desirable ranges, and according to one aspect it is preferably 0.01 $g/cm^3$ or greater, 0.1 $g/cm^3$ or greater, 0.15 $g/cm^3$ or greater, 0.2 $g/cm^3$ or greater, 0.3 $g/cm^3$ or greater, 0.4 $g/cm^3$ or greater, 0.5 $g/cm^3$ or greater or 0.6 $g/cm^3$ or greater and preferably 0.95 $g/cm^3$ or lower, 0.9 $g/cm^3$ or lower or 0.85 $g/cm^3$ or lower.

[Degree of compaction]

The degree of compaction is the value calculated by the formula: Degree of compaction = (Compacted bulk density - loose bulk density) / compacted bulk density. The loose bulk density and compacted bulk density are the values measured by the methods described herein under "Examples".

According to one aspect, the degree of compaction represents the extent of volume reduction. According to one aspect, the degree of compaction of the powder is preferably 1% or greater, 5% or greater, 10% or greater, 15% or greater, 20% or greater or 25% or greater, to avoid an excessively high flow property of the powder. For a satisfactory flow property and excellent feedability of the powder into the twin-screw extruder, for excellent handleability (specifically, resistance to scattering, suspension or dust formation), for satisfactory dispersion of the powder in the rubber, and to inhibit migration of the nonionic surfactant into the rubber, the degree of compaction is preferably 70% or lower, 50% or lower, 40% or lower, 35% or lower or 30% or lower.

[Angle of repose]

According to one aspect, the angle of repose of the powder is preferably 60° or smaller, 50° or smaller, 45° or smaller, 42° or smaller, 40° or smaller or 38° or smaller. Powder having an angle of repose in this range is advantageous from the viewpoint of a satisfactory flow property and excellent feedability into the twin-screw extruder, and for inhibiting migration of the nonionic surfactant into the rubber. The angle of repose may also be 10° or greater, 20° or greater or 30° or greater, for example, from the viewpoint of excellent handleability (specifically, resistance to scattering, suspension or dust formation), and for satisfactory dispersibility of the cellulose nanofiber in the rubber.

[Collapse angle]

The collapse angle of the powder is controlled to within a range that is useful for keeping the angle of repose and the angle of difference within desirable ranges, and according to one aspect it may be 10° or greater, 15° or greater, 17° or greater, 20° or greater, 25° or greater or 30° or greater, and according to another aspect it may be 50° or smaller, 45° or smaller, 40° or smaller, 35° or smaller, 33° or smaller or 32° or smaller.

[Angle of difference]

According to one aspect, the angle of difference of the powder (that is, the difference between the angle of repose and the collapse angle) is preferably greater than 1°, or 5° or greater, 10° or greater, 11° or greater, 12° or greater or 13° or greater. Powder with an angle of difference in this range has a high flow property and excellent feedability into the twin-screw extruder due to relatively low interaction between particles (such as frictional force), but easily disintegrates in the rubber to allow dispersion of the cellulose nanofibers into the rubber. From the viewpoint of facilitating production of the powder, the angle of difference may be 30° or smaller, 25° or smaller or 20° or smaller, for example.

The loose bulk density, compacted bulk density, degree of compaction, angle of repose, collapse angle and angle of difference are the values measured by the procedures explained under the section "Examples" below, using a powder tester (Model PT-X) by Hosokawa Micron Group.

[Specific surface area]

The specific surface area of the powder is preferably 5 $m^2$/g or greater, 6 $m^2$/g or greater or 7 $m^2$/g or greater, from the viewpoint of easily disintegrating the powder in the rubber so that the cellulose nanofibers satisfactorily disperse in the rubber, and from the viewpoint of avoiding excessive powder heaviness and reducing mixing defects with the powder and rubber, and preferably 50 $m^2$/g or lower, 20 $m^2$/g or lower or 10 $m^2$/g or lower, for a satisfactory powder flow property of the powder and excellent feedability to the twin-screw extruder, and from the viewpoint of inhibiting migration of the nonionic surfactant into the rubber. The specific surface area is determined as the BET specific surface area ($m^2$/g), calculated using the program of a specific surface area/pore distribution measuring apparatus (Nova-4200e, by Quantachrome Instruments), after drying approximately 0.2 g of the powder for 5 hours in a vacuum at 120°C and then measuring the nitrogen gas adsorption at the boiling point of liquid nitrogen at five points (multipoint method) in a relative vapor pressure ($P/P_0$) range of 0.05 to 0.2.

<Powder according to second aspect>

One aspect of the disclosure provides a powder composed of a composition that includes cellulose nanofibers and a surfactant, wherein the compacted bulk density is 0.01 $g/cm^3$ to 0.30 $g/cm^3$ and the specific surface area is 5 $m^2$/g to 50 $m^2$/g. Such powder can exhibit excellent processing properties and can therefore exhibit an excellent dispersed state for cellulose nanofibers in rubber, when using combinations of cellulose nanofibers with a wide range of rubber types. Powder according to the second aspect may have one or more of the same properties as powder according to the first aspect, in addition to the properties described below.

The compacted bulk density of the powder according to the second aspect is preferably 0.01 $g/cm^3$ or greater, 0.10 $g/cm^3$ or greater or 0.15 $g/cm^3$ or greater, and preferably 0.30 $g/cm^3$ or lower, 0.25 $g/cm^3$ or lower or 0.20 $g/cm^3$ or lower.

The specific surface area of the powder of the second aspect is preferably 5 $m^2$/g or greater, 10 $m^2$/g or greater or 15 $m^2$/g or greater, from the viewpoint of easily disintegrating the powder in the rubber so that the cellulose nanofibers satisfactorily disperse in the rubber, and from the viewpoint of avoiding excessive powder heaviness and reducing mixing defects with the powder and rubber, and it is preferably 50 $m^2$/g or lower, 40 $m^2$/g or lower or 30 $m^2$/g or lower, for a satisfactory powder flow property of the powder and excellent feedability to the twin-screw extruder, and from the viewpoint of inhibiting migration of the nonionic surfactant into the rubber.

A surfactant included in the powder according to the second aspect is nonionic, according to one aspect. According to one aspect, the nonionic surfactant has an aliphatic or aromatic group of 6 to 30 carbon atoms, or a combination thereof as the hydrophobic portion. Preferred examples of such nonionic surfactants are the same as mentioned above under "Nonionic surfactant".

<Production of powder>

The method for producing the powder (more specifically, powder according to the first and second aspects) may be a method that includes a slurry preparation step in which a slurry containing the cellulose nanofibers and liquid medium is prepared, and a drying step in which the slurry is dried to form a powder.

(Slurry preparation step)

In this step, a slurry is prepared. Examples of liquid media to be used include commonly used water-miscible organic solvents, such as alcohols with boiling points of 50°C to 170°C (for example, methanol, ethanol, *n*-propanol, *i*-propanol, *n*-butanol, *i*-butanol, s-butanol and *t*-butanol); ethers (for example, propyleneglycol monomethyl ether, 1,2-dimethoxyethane, diisopropyl ether, tetrahydrofuran and 1,4-dioxane); carboxylic acids (for example, formic acid, acetic acid and lactic acid); esters (for example, ethyl acetate and vinyl acetate); ketones (for example, acetone, methyl ethyl ketone, methyl isobutyl ketone, cyclopentanone and cyclohexanone); and nitrogen-containing solvents (such as dimethylformamide, dimethyl acetamide and acetonitrile). According to a typical aspect, the liquid medium in the slurry consists essentially of water. The slurry may be composed of the cellulose nanofibers and liquid medium, but it may also include a surfactant and/or the first rubber component, and also optionally an additional component.

From the viewpoint of process efficiency in the subsequent drying step, the concentration of the cellulose nanofibers in the slurry is preferably 5 mass% or greater, 10 mass% or greater, 15 mass% or greater, 20 mass% or greater or 25 mass% or greater, and from the viewpoint of avoiding excessive increase in the slurry viscosity and its solidification by aggregation to maintain satisfactory handleability, it is preferably 60 mass% or lower, 55 mass% or lower, 50 mass% or lower or 45 mass% or lower. Production of cellulose nanofibers is generally carried out in a dilute dispersion, for example, but the dilute dispersion can be concentrated to adjust the cellulose nanofiber concentration in the slurry to the aforementioned preferred range. A method such as suction filtration, pressure filtration, centrifugal dehydration or heating may be used for the concentration.

(Drying step)

In this step, the slurry is dried under controlled drying conditions to form a powder. The timing of addition of the components other than the cellulose nanofibers may be before, during and/or after drying of the slurry. A drying apparatus such as a spray drier or extruder may be used for the drying. The drying apparatus may be a commercial product, such as a Micromist spray dryer (Fujisaki Denki Co.), a spray drier (Ohkawara Kakohki Co., Ltd.), or a twin-screw extruder (Japan Steel Works, Ltd.). Appropriate control of the drying conditions, namely the drying speed, drying temperature and/or pressure (pressure reduction), and especially the drying speed, may be advantageous for obtaining powder in the desired form.

The drying speed, which is the amount of desorption (parts by mass) of the liquid medium per 1 minute per 100 parts by mass of slurry, may be 10%/min or greater, 50%/min or greater or 100%/min or greater from the viewpoint of rapidly drying the slurry to form powder of the desired particle size, and it may be 10,000%/min or lower, 1000%/min or lower or 500%/min or lower, from the viewpoint of avoiding excessive micronization of the cellulose nanofibers to reduce aggregation of the cellulose nanofibers, while also obtaining satisfactory handleability. The drying speed is the value calculated by the following formula:

$$\text{Drying speed (\%/min)} = (\text{Slurry moisture content at drying start point (mass\%) - powder moisture content at drying end point (mass\%))/time required from drying start point to drying end point (min),}$$

(i.e. it is the average value throughout the drying step).

The drying start point is the point where the slurry or cake to be dried has been supplied to the apparatus and the step of drying at the prescribed drying temperature, pressure reduction and shear rate has begun, and the drying time does not include the pre-mixing period with different drying temperature, pressure reduction or shear rate from the drying step.

The drying end point is the point where the moisture content first begins to fall below 7 mass% with sampling at maximum intervals of 10 minutes after the drying start point.

In the case of a continuous drying apparatus, the time required from the drying start point to the drying end point can be interpreted as the residence time. In the case of a spray drier, the residence time can be calculated from the heating air volume and the drying chamber volume. When an extruder is used as the drying apparatus, the residence time can be calculated from the screw rotational speed and the total screw pitch count.

The drying temperature may be 20°C or higher, 30°C or higher, 40°C or higher or 50°C or higher, for example, from the viewpoint of drying efficiency and of suitably aggregating the cellulose nanofibers to form powder of the preferred particle size, and it may also be 200°C or lower, 150°C or lower, 140°C or lower, 130°C or lower or 100°C or lower from the viewpoint of reducing heat degradation of the cellulose nanofibers and additional components and of avoiding excessive micronization of the cellulose nanofibers.

The drying temperature is the temperature of the heat source that is contacted with the slurry, and it is defined as the surface temperature of the temperature control jacket of the drying apparatus, the surface temperature of the heating cylinder, or the temperature of the hot air, for example.

The pressure reduction may be -1 kPa or lower, -10 kPa or lower, -20 kPa or lower, -30 kPa or lower, -40 kPa or lower or -50 kPa or lower, from the viewpoint of drying efficiency and of suitably aggregating the cellulose nanofibers to form powder of the preferred particle size, and - 100 kPa or greater, -95 kPa or greater or -90 kPa or greater from the viewpoint of avoiding excessive micronization of the cellulose nanofibers.

During the drying step, the residence time of the slurry at a temperature of 20°C to 200°C is preferably 0.01 minutes to 10 minutes, 0.05 minutes to 5 minutes or 0.1 minutes to 2 minutes. With drying under these conditions the cellulose nanofibers dry rapidly, satisfactorily producing powder of the preferred particle size.

When a spray drier is used, for example, the slurry is dried by introducing spray into a drying chamber containing circulating hot gas, using a spraying mechanism (such as a rotating disc or pressurized nozzle). The slurry droplet size during spray introduction may be 0.01 $\mu$m to 500 $\mu$m, 0.1 $\mu$m to 100 $\mu$m or 0.5 $\mu$m to 10 $\mu$m, for example. The hot gas may be an inert gas such as nitrogen or argon, or air. The hot gas temperature may be 50°C to 300°C, 80°C to 250°C or 100°C to 200°C, for example. Contact between the slurry droplets and the hot gas in the drying chamber may be by cocurrent flow, countercurrent flow or parallel flow. The particulate powder produced by drying of the droplets is collected using a cyclone or drum.

When an extruder is used, for example, the slurry is loaded into a screw-equipped kneading unit through a hopper, and the slurry is dried by continuous transport of the slurry with the screw in the kneading unit that is being depressurized and/or heated. The screw configuration may be a combination of a transport screw, counter-clockwise screw or kneading disc, in any order. The drying temperature may be 50°C to 300°C, 80°C to 250°C or 100°C to 200°C, for example.

<Master batch>

One aspect of the disclosure provides a master batch that includes the composition of the disclosure (a cellulose/surfactant composition or a rubber composition, according to one aspect), or the powder of the disclosure. According to one aspect, the master batch is a kneaded blend of the powder of the disclosure, either including or not including the first rubber component, and a second rubber component. Specific preferred examples of the second rubber component are the same as mentioned above for the first rubber component. The first rubber component and second rubber component may be of the same type or different types.

According to a preferred aspect, the master batch includes the cellulose nanofibers at 10 parts by mass to 50 parts by mass or 15 parts by mass to 30 parts by mass, and the surfactant at 1 part by mass to 25 parts by mass, with respect to 100 parts by mass of the rubber component. The amount of rubber component is the total amount of the rubber components in the master batch (according to one aspect, the total amount of the first rubber component and second rubber component). According to one aspect, the component composition of the master batch may be the same as described above for the rubber composition. The mass ratio with respect to the additional component (the second rubber component according to one aspect) in the master batch (i.e., master batch/additional component) may be 1/99 to 99/1, 5/95 to 95/5, 10/90 to 90/10, 20/80 to 80/20, 30/70 to 70/30 or 40/60 to 60/40.

One aspect of the disclosure provides a method for producing a master batch that includes a step of kneading the powder of the disclosure with the second rubber component to obtain a master batch. The kneading conditions are not particularly restricted, and for example, a publicly known closed kneader such as an internal mixer may be used under conditions for a kneading discharge temperature of 135 to 180°C, with kneading carried out one or more times.

In the master batch of one aspect, the amount of vulcanizing agent and/or vulcanization accelerator with respect to uncured rubber in the master batch may be in the same range as described above for the amount of vulcanizing agent and/or vulcanization accelerator with respect to uncured rubber in the rubber composition.

In the master batch of one aspect, the amounts of rubber additives and additional components in the master batch may also be in the same ranges as described above for the amounts in the rubber composition.

<Rubber composite>

One aspect of the disclosure provides a rubber composite which is a kneaded blend of the powder or master batch of the disclosure and the third rubber component. Specific preferred examples of the third rubber component are the same as mentioned above for the first rubber component. The first rubber component and/or second rubber component may be of the same type or different types as the third rubber component.

According to one aspect, the mass ratio of the powder and the third rubber component (powder/third rubber component) is 1/99 to 99/1, 5/95 to 95/5, 10/90 to 90/10, 20/80 to 80/20, 30/70 to 70/30 or 40/60 to 60/40.

According to one aspect, the mass ratio of the master batch and the third rubber component (master batch/third rubber component) may be 1/99 to 99/1, 5/95 to 95/5, 10/90 to 90/10, 20/80 to 80/20, 30/70 to 70/30 or 40/60 to 60/40.

In the rubber composite of one aspect, the amount of vulcanizing agent and/or vulcanization accelerator with respect to uncured rubber in the rubber composite may be in the same range as described above for the amount of vulcanizing agent and/or vulcanization accelerator with respect to uncured rubber in the rubber composition.

In the rubber composite of one aspect, the amounts of rubber additives and additional components in the rubber composite may also be in the same ranges as described above for the amounts in the rubber composition.

The rubber composite can be produced by a method that includes a step of kneading the powder of the disclosure and the third rubber component, or forming a master batch by the method for producing a master batch of the disclosure, and then kneading the master batch with the third rubber component, to obtain a rubber composite. The kneading conditions are not particularly restricted, and for example, a publicly known closed kneader such as an internal mixer may be used under conditions for a kneading discharge temperature of 135 to 180°C, with kneading carried out one or more times.

<Cured rubber product and molded article>

One aspect of the disclosure provides a cured rubber product as the cured product of a curable component including the composition of the disclosure. According to one aspect, the rubber composition of the disclosure (that is, the composition including cellulose nanofibers, a nonionic surfactant and a first rubber component) or the powder of the disclosure may be molded into a desired shape either alone or together with additional components, to produce a desired molded article. Typically, the cellulose/surfactant composition of the disclosure (that is, the composition including cellulose nanofibers and a nonionic surfactant) or the powder of the disclosure will be molded into a desired shape together with additional components to produce the desired molded article. The method of combining the rubber composition or cellulose/surfactant composition or powder and the additional components and the method of molding are not particularly restricted and may be selected as suited for the desired molded article.

The additional components may be selected from among various polymers and additives, as suitable for the desired molded article. According to one aspect, the additional components may be one or more selected from the group consisting of thermoplastic resins (or elastomers) and uncured rubber. Preferred examples of thermoplastic elastomers and uncured rubber include the same ones mentioned above for the first rubber component of the disclosure. According to one aspect, the additional components are a first, second and/or third rubber component.

Molding methods include, but are not limited to, the following:

a method in which the first rubber component in the rubber composition of the disclosure is uncured, and the rubber component is cured in the system either before, during and/or after molding of the rubber composition, either alone or together with additional components (according to one aspect, using a master batch including the rubber composition and combining the master batch with the additional components), to obtain a molded article including the cured rubber product,

a method in which the first rubber component in the rubber composition of the disclosure is uncured, and curing of the first rubber component in the rubber composition is carried out simultaneously with molding to obtain a molded article made of the cured rubber product,

a method in which the first rubber component in the rubber composition of the disclosure is uncured, and the master batch including the rubber composition is molded and cured together with the additional components to obtain a molded article, and

a method in which the first rubber component in the rubber composition of the disclosure is a thermoplastic elastomer and the rubber composition is melt molded either alone or together with the additional components to obtain a molded article. The molding may be carried out by injection molding, extrusion molding, irregular shape extrusion molding, blow molding or compression molding.

According to one aspect, the cured rubber product is the cured product of a rubber composite of the disclosure. According to one aspect, the cured rubber product can be produced by a method including a step of obtaining a rubber composite by the method for producing a rubber composite of the disclosure, and a step of obtaining a cured rubber product by curing the rubber composite. The curing conditions in this case may be pressing at 160°C for 20 minutes.

The cured rubber product may be used to form molded articles of various shapes. The molded articles can be used for a wide range of purposes including industrial machinery parts, general machine parts, automobile/railway/vehicle/ship/aerospace-related parts, electronic and electrical components, construction and civil engineering materials, daily household items, sports and leisure goods, wind power generation case members, and container and packaging materials. Examples of such purposes include automobile parts (for example, bumpers, fenders, door panels, various moldings, emblems, engine hoods, wheel caps, roofs, spoilers, exterior parts including aero parts, and interior parts including instrument panels, console boxes and trims), battery parts (such as on-vehicle secondary battery parts, lithium ion secondary battery parts, solid methanol battery fuel cases and fuel cell tubings), and electronic and electrical device parts (for example, computers and peripheral devices, junction boxes, connectors, OA devices, televisions, videos, disc players, chassis, refrigerators, air conditioners and liquid crystal projectors).

One aspect of the disclosure provides a shoe outsole, tire, vibration-proof rubber or drive belt that includes a cured rubber product of the disclosure.

EXAMPLES

Exemplary modes of the invention will now be further illustrated using Examples, with the understanding that the invention is not limited to these Examples.

<Material evaluation methods>

<Measurement of toluene insoluble portion of rubber latex particles>

After mixing about 0.5 g of rubber latex particles with 30 ml of toluene and shaking the mixture for 3 hours, it was filtered through a metal mesh with mesh openings of 32 $\mu$m, after which the residue was dried at 130°C for 1 hour and the dry mass was measured. The ratio of the dry mass of the residue with respect to the mass of the original rubber latex particles was recorded as the toluene insoluble portion (%).

<Liquid rubber>

[Vinyl and aromatic styrene contents]

A sample was dissolved in deuterated chloroform and measured by $^{13}$C-NMR (JEOL ECZ500) under the following conditions.

Resonance frequency: 125 MHz
Pulse width: 90°
Repetition time: 8 sec
Total: 5120 times
Temperature: room temperature
Chemical shift reference: $CDCl_3$ 77.0 ppm

[Number-average molecular weight (Mn) and weight-average molecular weight (Mw)]

Three columns packed with polystyrene gel were used in linkage for gel permeation chromatography (GPC) to obtain a chromatogram, and the molecular weight (Mn, Mw) and molecular weight distribution (Mw/Mn) were calculated from a calibration curve using standard polystyrene. The solvent used was tetrahydrofuran.

[Viscosity]

The viscosity of the liquid rubber was measured using a Brookfield viscometer at a rotational speed of 10 rpm.

<Materials>

<Rubber component>

[Liquid rubber]

Liquid rubber-1: Butadiene-styrene random copolymer (RICON 184, available from Cray Valley Co.), 25°C viscosity: 40,000 cP, number-average molecular weight (Mn): 3,200, weight-average molecular weight (Mw): 14,000, Mw/Mn: 4.3, vinyl content 19 mol%, aromatic styrene content: 8 mol%

[Solution polymerized rubber]

Rubber-1: ASAPRENE Y031 (available from Asahi Kasei Corp.)

[Rubber latex particles]

Latex-1: L1599 (water-dispersed latex of styrene-butadiene rubber particles, particle size: 230 nm, rubber particle content of rubber latex: 50%, toluene insoluble portion: 93%)

<Cellulose nanofibers>

CNF-1: Microfilament cellulose (CELISH KY-100G, available from Daicel Miraizu, Ltd.)
CNF-2: Microfilament cellulose

After immersing 3 parts by mass of cotton linter pulp in 27 parts by mass of water, the mixture was dispersed with a pulper. Next, 170 parts by mass of water was added to 30 parts by mass of the pulper-processed cotton linter pulp slurry (of which 3 parts by mass was cotton linter pulp), dispersing the latter in the water (1.5 mass% solid content), and a Model SDR14 Lab Refiner (pressurized DISK type) by Aikawa Iron Works Co. was used as a disc refiner apparatus for beating treatment of the aqueous dispersion for 30 minutes with a disc clearance of 1 mm. This was followed by thorough beating under conditions with clearance reduced to a level of near zero, to obtain a beaten aqueous dispersion (solid concentration: 1.5 mass%). The obtained beaten aqueous dispersion was directly subjected to micronization treatment 10 times using a high-pressure homogenizer (NSO15H by Niro Soavi) at an operating pressure of 100 MPa, to obtain a microcellulose fiber slurry (solid concentration: 1.5 mass%). The mixture was then concentrated to a solid content of 10 mass% using a dehydrator, to obtain a concentrated cake of cellulose microfilaments.

<Nonionic surfactant>

Surfactant-1: Polyoxyethylene(2) monolauryl ether (EMULGEN 102KG, available from Kao Corp.), where the number in parentheses indicates the average number of oxyethylene chain repeats
Surfactant-2: Sorbitan monooleate (RHEODOL SP-O10 V, available from Kao Corp.)
Surfactant-3: Polyoxyethylene(6) sorbitan monolaurate (RHEODOL TW-L106, available from Kao Corp.), where the number in parentheses indicates the average number of oxyethylene chain repeats
Surfactant-4: Ethylene glycol-propylene glycol copolymer (PEG-PPG) (SANNIX GL-3000, available from Sanyo Chemical Industries, Ltd.)
Surfactant-5: Polyoxyethylene(2) benzyl ether (BLAUNON BA-2, available from Aoki Oil Industrial Co., Ltd.), where the number in parentheses indicates the average number of oxyethylene chain repeats
Surfactant-6: Polyoxyethylene(3) β-naphthyl ether (BLAUNON BN-3, available from Aoki Oil Industrial Co., Ltd.), where the number in parentheses indicates the average number of oxyethylene chain repeats
Surfactant-7: Polyoxyethylene(3) hydrogenated castor oil ether (BLAUNON CW-3, available from Aoki Oil Industrial Co., Ltd.), where the number in parentheses indicates the average number of oxyethylene chain repeats
Surfactant-8: Polyoxyethylene(5.3) dodecylphenyl ether (BLAUNON DP-3, available from Aoki Oil Industrial Co., Ltd.), where the number in parentheses indicates the average number of oxyethylene chain repeats
Surfactant-9: Polyoxyethylene(7.5) styrenated phenyl ether (BLAUNON TSP-7.5, available from Aoki Oil Industrial Co., Ltd.), where the number in parentheses indicates the average number of oxyethylene chain repeats

<Silica>

Silica-1: Precipitated silica (ULTRASII, 7000 GR, available from Degussa Ltd.)

<Carbon black>

SEAST KH: N339 (available from Tokai Carbon)

<Silane coupling agent>

Si75: bis(3-(Triethoxysilyl)propyl) disulfide (available from Evonik, Japan)

<Oil>

PF30: Mineral oil (available from JXTG Energy)

<Vulcanizing aid>

[0204]

　　Zinc oxide: Available from FujiFilm-Wako Pure Chemical Industries
　　Stearic acid: Available from FujiFilm-Wako Pure Chemical Industries

<Wax>

SUNNOC: Selected Special Wax (available from Ouchi Shinko Chemical Industrial Co., Ltd.)

<Aging inhibitor>

NOCRAC 6C: N-Phenyl-N'-(1,3-dimethylbutyl)-*p*-phenylenediamine (available from Ouchi Shinko Chemical Industrial Co., Ltd.)

<Vulcanization accelerator>

[0207]

　　NOCCELER CZ: N-Cyclohexyl-2-benzothiazolyl sulfenamide (available from Ouchi Shinko Chemical Industrial Co., Ltd.)
　　NOCCELER D: 1,3-Diphenylguanidine (available from Ouchi Shinko Chemical Industrial Co., Ltd.)

<Production of intermediate compositions>

<Production of intermediate compositions 1 to 16>

Purified water was added to CNF-1 or CNF-2 to prepare an aqueous dispersion with a final cellulose nanofiber content of 5 mass%, and then nonionic surfactants were added according to the composition listed in Table 1, with further addition of liquid rubber or rubber latex particles for intermediates 5, 6, 15 and 16, and an ARE-310 rotating/revolving mixer by Thinky Corp. was used for 5 minutes of mixing to obtain a dispersion of a cellulose nanofiber composition. Each resulting dispersion was dried at 80°C using an SPH-201 by Espec Corp. The obtained dried body was pulverized using an MS-05 Mini Speed Mill by Labonect Co., to obtain an intermediate composition powder. For intermediate composition 15, the dried body was frozen by processing for 10 minutes at the temperature of liquid nitrogen, and then supplied for the pulverizing.

<Evaluation of intermediate compositions>

Each intermediate composition was evaluated in the following manner. A Model PT-X powder tester by Hosokawa Micron Group was used for the measurement.

[Loose bulk density]

The powder was placed in a 100 mL-volume stainless steel closed-bottom cylindrical container (50.46 mm inner diameter × 50 mm depth), using a dispensing spoon at 10 g/min to overflowing, and after top scraping the powder, its weight was measured to a precision of 0.01 g. The number-average value of 3 weight measurements was divided by the internal volume of the closed-bottom cylindrical container to calculate the loose bulk density.

[Compacted bulk density]

A sufficient volume of resin adapter (50.46 mm inner diameter × 40 mm length) was connected in a closely fitting manner with the top of the same type of closed-bottom cylindrical container used for the loose bulk density, and the powder was introduced to overflowing by the same procedure used for measurement of the loose bulk density, after which the adapter-connected closed-bottom cylindrical container was subjected to 50 Hz vibration at an amplitude of 1.5 mm for 30 seconds with a motor having an eccentric weight on the rotating shaft. The adapter was then removed, the top powder was scraped off, and the weight was measured to a precision of 0.01 g. The number-average value of three weight measurements was divided by the internal volume of the closed-bottom cylindrical container to calculate the compacted bulk density.

[Degree of compaction]

This was calculated by the formula: Degree of compaction = (Compacted bulk density - loose bulk density) / compacted bulk density.

[Angle of repose, collapse angle (jetting) and angle of difference (jetting)]

A dispensing spoon was used to gently place 100 g of powder at the center of a horizontally set stainless steel measuring stage with a diameter of 80 mm, through a funnel (stainless steel, upper opening diameter: 70 mm, lower opening diameter: 7 mm, inclination angle: 60°) at a rate of about 10 g/min, with a height of 110 mm between the lower opening of the funnel and the measuring stage, accumulating the powder in a conical shape on the measuring stage. A photograph was taken from the side of the conical shape, and the angle between the generatrix of the cone and the horizontal plane was measured. The number-average value of three measurements was recorded as the angle of repose.
A 109 g weight on the same pedestal as the measuring stage was then dropped from a height of 160 mm three times at 2-second intervals onto the sample whose angle of repose was being measured, and then a photograph was taken from the side of the conical shape of the sample and the angle between the generatrix of the cone and the horizontal plane was measured. The number-average value of three measurements was recorded as the collapse angle.
The difference between the angle of repose and the collapse angle was calculated as the angle of difference.

[Specific surface area]

This was determined as the BET specific surface area ($m^2$/g), calculated using the program of a specific surface area/pore distribution measuring apparatus (Nova-4200e, by Quantachrome Instruments), after drying approximately 0.2 g of the powder for 5 hours in a vacuum at 120°C and then measuring the nitrogen gas adsorption at the boiling point of liquid nitrogen at five points (multipoint method) in a relative vapor pressure ($P/P_0$) range of 0.05 to 0.2.

<Rubber composite>

<Examples 1 to 5 and Comparative Example 3>

Liquid rubber-1 (RICON 184 by Cray Valley Co.) was added to the intermediate composition according to the composition listed in Table 2, and an ARE-310 rotating/revolving mixer by Thinky Corp. was used for 15 minutes of mixing to obtain a rubber composite.

<Comparative Example 1>

Liquid rubber-1 alone was subjected to mixer processing under the same conditions as Example 1 to obtain a control sample.

<Comparative Example 2>

A rubber composite was obtained in the same manner as Example 1, except that a mixture of previously prepared liquid rubber-1 (RICON 184) and silica-1 (ULTRASIL 7000 GR) was used instead of the intermediate composition.

<Evaluation of rubber composites>

[Storage modulus]

In order to confirm the dispersed states of the cellulose nanofibers in the rubber composites and control samples of Examples 1 to 5 and Comparative Examples 1 to 3, a HAAKE MARS40 Rheometer by Thermo Fisher Scientific Inc. was used to measure the frequency dispersion at 25°C with a strain of 0.002% and parallel plates separated by a gap of 1 mm, and the storage modulus was determined. A high storage modulus indicates satisfactory dispersion of the cellulose nanofibers in the rubber and satisfactory mechanical properties such as elastic modulus and hardness.

[Dispersibility]

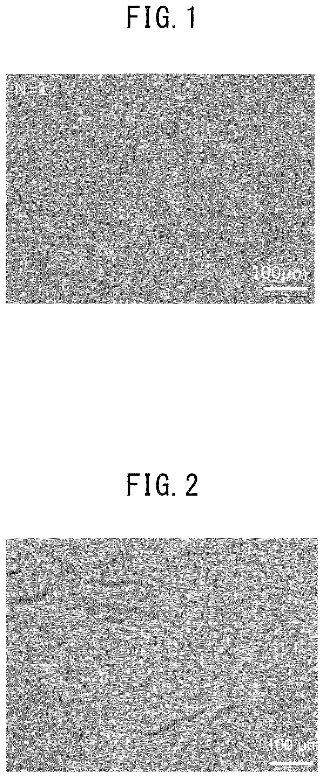

The rubber composites obtained in Example 1 and Comparative Example 3 were observed with an optical microscope under the following conditions. A 10 mg sample was sandwiched between two cover glass panels and crushed and spread to a uniform thickness. The sample was placed on the stage of a BX51P polarizing microscope by Olympus Corp. A U-DICR differential interference prism by Olympus Corp. was inserted and the differential interference was observed. The results are shown in Figs. 1 and 2.

The rubber composites and control samples of Examples 1 to 5 and Comparative Examples 1 to 3 were evaluated for dispersibility on the following scale, using a BX-51P polarizing microscope by Olympus Corp.

    A: Generally uniformly dispersed.
    B: Dispersed, but with visible aggregation.
    C: Extensive aggregation confirmed.

<Cured rubber products>

<Examples 6 to 12>

A Laboplastomil by Toyo Seiki Co., Ltd. was heated to 70°C, and rubber-1 (ASAPRENE Y031) was added and kneaded for 0.5 minutes. The intermediate composition, vulcanizing aid, wax and antioxidant were added to the mixture according to the compositions listed in Table 3 and kneaded for 5.5 minutes as the first-stage kneading. The resulting first-stage kneaded composition was then added to a Laboplastomil that had been heated to 70°C, and after kneading for 0.5 minutes, sulfur and a vulcanization accelerator were added according to the composition listed in Table 3 and the mixture was kneaded for 2 minutes. The resulting second-stage kneaded composition was vulcanized with a vulcanizing press for 20 minutes at 160°C to obtain a cured rubber product.

<Comparative Examples 4 to 6>

Cured rubber products were obtained by the same method as Example 6, according to the compositions listed in Table 3. For Comparative Example 5, silica-1 (ULTRASIL 7000 G), a silane coupling agent, surfactant-1 (EMULGEN 102KG) and liquid rubber-1 (RICON 184) were simultaneously added instead of the intermediate composition, and the rubber was kneaded. For Comparative Example 6, carbon black (N339), surfactant-1 (EMULGEN 102KG) and liquid rubber-1 (RICON 184) were simultaneously added instead of the intermediate composition, and the rubber was kneaded.

<Examples 13 to 16>

A closed kneader (0.3 L interior volume) equipped with a temperature control unit was used for kneading of rubber-1 (ASAPRENE Y031), a filler (silica, carbon black, intermediate composition), a silane coupling agent and an oil, according to the compositions listed in Table 4, under conditions with a 65% fill factor and a rotor rotational speed of 50/57 rpm, as the first-stage kneading. The temperature of the hermetic mixer was controlled during this time, with a discharge temperature of 155 to 160°C, to obtain a first-stage kneaded blend.

The first-stage kneaded blend was then cooled to room temperature, after which an aging inhibitor, vulcanizing aid and wax were added and kneading was continued for improved dispersion of the silica, as the second-stage kneading. For this kneading as well, the mixer temperature was controlled, with the kneaded blend discharge temperature adjusted to 155 to 160°C, to obtain a second-stage kneaded blend. The second-stage kneaded blend was cooled to room temperature, and then sulfur and a vulcanization accelerator were added and kneaded using an open roll set to 70°C, as the third-stage kneading. The kneaded mixture was molded and vulcanized with a vulcanizing press at 160°C for 20 minutes to obtain a cured rubber product.

<Comparative Examples 7 and 8>

Cured rubber products were obtained by the same method as Example 13, according to the compositions listed in Table 4. For Comparative Example 7, silica-1 (ULTRASIL 7000 G), a silane coupling agent and surfactant-1 (EMULGEN 102KG) were simultaneously added instead of the intermediate composition, and the rubber was kneaded. For Comparative Example 8, carbon black (N339) and surfactant-1 (EMULGEN 102KG) were simultaneously added instead of the intermediate composition, and the rubber was kneaded.

<Evaluation of cured rubber products>

[Tensile strength]

Each of the cured rubber products was measured for tensile strength by the tensile test method of JIS K6251.

[Viscoelastic property]

Each of the cured rubber products was measured for storage modulus at 50°C. The measurement was conducted using an ARES-G2 rheometer by TA Instruments, based on the torsion method at 50°C with a frequency of 10 Hz and a distortion of 3%. A high storage modulus indicates satisfactory dispersion of the cellulose nanofibers in the rubber and satisfactory mechanical properties such as elastic modulus and hardness.

The results are shown in Tables 1 to 4.

[Table 1]

Table 1

| | | | Units | Intermediate 1 | Intermediate 2 | Intermediate 3 | Intermediate 4 | Intermediate 5 | Intermediate 6 | Intermediate 7 | Intermediate 8 | Intermediate 9 | Intermediate 10 | Intermediate 11 | Intermediate 12 | Intermediate 13 | Intermediate 14 | Intermediate 15 | Intermediate 16 |
|---|---|---|---|---|---|---|---|---|---|---|---|---|---|---|---|---|---|---|---|
| | Water | | mass % | 92.86 | 92.86 | 92.86 | 92.86 | 90.00 | 90.00 | 92.86 | 92.86 | 92.86 | 92.86 | 92.86 | 92.86 | 92.86 | 92.86 | 90.00 | 85.00 |
| | Cellulose nanofiber | CNF-1 | mass % | 5 | 5 | 5 | 5 | 5 | 5 | | | | | | | | | | |
| | | CNF-2 | mass % | | | | | | | 5 | 5 | 5 | 5 | 5 | 5 | 5 | 5 | 5 | 5 |

| | | | Units | Intermediate 1 | Intermediate 2 | Intermediate 3 | Intermediate 4 | Intermediate 5 | Intermediate 6 | Intermediate 7 | Intermediate 8 | Intermediate 9 | Intermediate 10 | Intermediate 11 | Intermediate 12 | Intermediate 13 | Intermediate 14 | Intermediate 15 | Intermediate 16 |
|---|---|---|---|---|---|---|---|---|---|---|---|---|---|---|---|---|---|---|---|
| Cellulose nanofiber composition dispersion | Nonionic surfactant | Surfactant-1 | mass % | 2.14 | | | | 2.14 | 2.14 | 2.14 | | | | | | | | 2.14 | 2.14 |
| | | Surfactant-2 | mass % | | 2.14 | | | | | | 2.14 | | | | | | | | |
| | | Surfactant-3 | mass % | | | 2.14 | | | | | | | | | | | | | |
| | | Surfactant-4 | mass % | | | | 2.14 | | | | | 2.14 | | | | | | | |
| | | Surfactant-5 | mass % | | | | | | | | | | 2.14 | | | | | | |
| | | Surfactant-6 | mass % | | | | | | | | | | | 2.14 | | | | | |
| | | Surfactant-7 | mass % | | | | | | | | | | | | 2.14 | | | | |
| | | Surfactant-8 | mass % | | | | | | | | | | | | | 2.14 | | | |
| | | Surfactant-9 | mass % | | | | | | | | | | | | | | 2.14 | | |
| | Rubber latex | Latex-1 | mass % | | | | | 2.86 | | | | | | | | | | | |
| | Liquid rubber | Liquid rubber-1 | mass % | | | | | | 2.86 | | | | | | | | | 2.86 | 7.86 |
| | | Item | Units | | | | | | | | | | | | | | | | |

EP 4 296 076 A1

(continued)

| | | Units | Inter-medi-ate | Inter-medi-ate | Inter-medi-ate | Inter-medi-ate | Inter-medi-ate | Inter-medi-ate | Inter-medi-ate | Inter-medi-ate | Inter-medi-ate | Inter-medi-ate | Inter-medi-ate | Inter-medi-ate | Inter-medi-ate | Inter-medi-ate | Inter-medi-ate | Inter-medi-ate |
|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 | 16 |
| Evaluation (after drying and pulverizing) | Angle of repose | ° | 46.6 | 47.3 | 48.2 | 49.0 | 48.5 | 48.9 | 46.1 | 47.1 | 46.4 | 46.9 | 46.9 | 46.5 | 46.4 | 46.5 | 48.8 | 48.9 |
| | Loose bulk density | g/cm$^3$ | 0.080 | 0.084 | 0.085 | 0.088 | 0.088 | 0.098 | 0.095 | 0.082 | 0.088 | 0.082 | 0.081 | 0.076 | 0.076 | 0.077 | 0.095 | 0.096 |
| | Compacted bulk density | g/cm$^3$ | 0.17 | 0.18 | 0.18 | 0.20 | 0.28 | 0.19 | 0.14 | 0.20 | 0.30 | 0.18 | 0.18 | 0.12 | 0.11 | 0.14 | 0.20 | 0.21 |
| | Degree of compaction | % | 53.7 | 52.7 | 53.3 | 56.0 | 68.9 | 48.4 | 31.0 | 59.5 | 70.7 | 53.5 | 53.7 | 34.4 | 31.7 | 46.0 | 51.7 | 54.4 |
| | Collapse angle (jetting) | ° | 43.3 | 41.9 | 41.7 | 40.7 | 40.4 | 41.6 | 44.4 | 39.8 | 41.7 | 41.9 | 43.3 | 44.1 | 44.2 | 44.7 | 40.8 | 39.2 |
| | Angle of difference (jetting) | ° | 3.3 | 5.4 | 6.5 | 8.3 | 8.1 | 7.3 | 1.7 | 7.3 | 4.7 | 5 | 3.6 | 2.4 | 2.2 | 1.8 | 8 | 9.7 |
| | Specific surface area | m$^2$/g | 13.1 | 9.9 | 6.5 | 4.8 | 5.1 | 10.2 | 14.2 | 10.5 | 4.4 | 19.9 | 9.8 | 5.5 | 8.1 | 6.2 | 9.8 | 5.0 |

EP 4 296 076 A1

[Table 2]

33

Table 2

| Rubber composite | | | | Comp. Example 1 | Comp. Example 2 | Example 1 | Example 2 | Example 3 | Comp. Example 3 | Example 4 | Example 5 |
|---|---|---|---|---|---|---|---|---|---|---|---|
| | | | | | | Inter-mediate 1 | Inter-mediate 2 | Inter-mediate 3 | Inter-mediate 4 | Inter-mediate 5 | Inter-mediate 6 |
| Rubber composite | Liquid rubber | Liquid rubber-1 | mass% | 100 | 90 | 85.71 | 85.71 | 85.71 | 85.71 | 80.00 | *85.71 |
| | Cellulose nanofibers | CNF-1 | mass% | | | 10 | 10 | 10 | 10 | 10 | 10 |
| | Nonionic surfactant | Surfactant-1 | mass% | | | 4.29 | | | | 4.29 | 4.29 |
| | | Surfactant-2 | mass% | | | | 4.29 | | | | |
| | | Surfactant-3 | mass% | | | | | 4.29 | | | |
| | | Surfactant-4 | mass% | | | | | | 4.29 | | |
| | Rubber latex | Latex-1 | mass% | | | | | | | 5.71 | |
| | Silica | Silica-1 | mass% | | 10 | | | | | | |
| Viscoelasticity measurement | Storage modulus at 1 Hz frequency | | Pa | 12 | 360 | 18025 | 22767 | 18575 | 10706 | 84050 | 34393 |
| Other | Filler dispersibiliri | | A-C | C | C | A | A | A | B | C | A |
| *of which 5.71 wt% liquid rubber from intermediate 6 | | | | | | | | | | | |

EP 4 296 076 A1

34

[Table 3]

Table 3

| | | | Units | Example 6 | Comp. Example 4 | Example 7 | Example 8 | Example 9 | Example 10 | Example 11 | Example 12 | Comp. Example 5 | Comp. Example 6 |
|---|---|---|---|---|---|---|---|---|---|---|---|---|---|
| | Rubber component | Y031 | Parts by mass | 100 | 100 | 100 | 100 | 100 | 100 | 100 | 100 | 100 | 100 |

EP 4 296 076 A1

(continued)

| | | | Units | Example 6 | Comp. Example 4 | Example 7 | Example 8 | Example 9 | Example 10 | Example 11 | Example 12 | Comp. Example 5 | Comp. Example 6 |
|---|---|---|---|---|---|---|---|---|---|---|---|---|---|
| First stage | Intermediate composition | Intermediate 7 | Parts by mass | 7.14 | | | | | | | | | |
| | | Intermediate 9 | Parts by mass | | 7.14 | | | | | | | | |
| | | Intermediate 10 | Parts by mass | | | 7.14 | | | | | | | |
| | | Intermediate 11 | Parts by mass | | | | 7.14 | | | | | | |
| | | Intermediate 12 | Parts by mass | | | | | 7.14 | | | | | |
| | | Intermediate 13 | Parts by mass | | | | | | 7.14 | | | | |
| | | Intermediate 14 | Parts by mass | | | | | | | 7.14 | | | |
| | | Intermediate 15 | Parts by mass | | | | | | | | 10 | | |
| | Filler | Silica | Silica-1 | Parts by mass | | | | | | | | | 5 | |
| | | CB | N339 | Parts by mass | | | | | | | | | | 5 |

37

| | | | Units | Example 6 | Comp. Example 4 | Example 7 | Example 8 | Example 9 | Example 10 | Example 11 | Example 12 | Comp. Example 5 | Comp. Example 6 |
|---|---|---|---|---|---|---|---|---|---|---|---|---|---|
| | Surfactant-1 | EMULGEN 102KG | Parts by mass | 0 | 0 | 0 | 0 | 0 | 0 | 0 | 0 | 2.14 | 2.14 |
| | Liquid rubber-1 | RICON184 | Parts by mass | 0 | 0 | 0 | 0 | 0 | 0 | 0 | 0 | 2.86 | 2.86 |
| | Silane coupling agent | Si75 | Parts by mass | 0 | 0 | 0 | 0 | 0 | 0 | 0 | 0 | 0.4 | 0 |
| | Vulcanizing aid | Zinc oxide | Parts by mass | 2.5 | 2.5 | 2.5 | 2.5 | 2.5 | 2.5 | 2.5 | 2.5 | 2.5 | 2.5 |
| | | Stearic acid | Parts by mass | 2 | 2 | 2 | 2 | 2 | 2 | 2 | 2 | 2 | 2 |
| | Aging inhibitor | NOCRAC 6C | Parts by mass | 2 | 2 | 2 | 2 | 2 | 2 | 2 | 2 | 2 | 2 |
| | Wax | SUNNOC | Parts by mass | 1.5 | 1.5 | 1.5 | 1.5 | 1.5 | 1.5 | 1.5 | 1.5 | 1.5 | 1.5 |
| Second stage | Sulfur | Sulfur | Parts by mass | 1.7 | 1.7 | 1.7 | 1.7 | 1.7 | 1.7 | 1.7 | 1.7 | 1.7 | 1.7 |
| | Vulcanization accelerator | NOCCELER CZ | Parts by mass | 1.7 | 1.7 | 1.7 | 1.7 | 1.7 | 1.7 | 1.7 | 1.7 | 1.7 | 1.7 |
| | | NOCCELER D | Parts by mass | 2 | 2 | 2 | 2 | 2 | 2 | 2 | 2 | 2 | 2 |

(continued)

| | | Units | Example 6 | Comp. Example 4 | Example 7 | Example 8 | Example 9 | Example 10 | Example 11 | Example 12 | Comp. Example 5 | Comp. Example 6 |
|---|---|---|---|---|---|---|---|---|---|---|---|---|
| Evaluation | Storage modulus (3%, 50°C) | MPa | 2.60 | 1.22 | 2.43 | 1.99 | 1.94 | 2.17 | 2.16 | 1.51 | 0.91 | 0.83 |
| | Tensile strength | MPa | 3.39 | 2.21 | 3.15 | 2.54 | 3.01 | 2.94 | 2.46 | 2.04 | 1.70 | 1.12 |

[Table 4]

[Table 4]

Table 4

| | | | Units | Example 13 | Example 14 | Example 15 | Example 16 | Comp. Example 7 | Comp. Example 8 |
|---|---|---|---|---|---|---|---|---|---|
| First stage | Rubber component | Y031 | Parts by mass | 100 | 100 | 100 | 100 | 100 | 100 |
| | Filler | Intermediate composition | Intermediate 7 | Parts by mass | 7.14 | 14.28 | 21.42 | | | |
| | | | Intermediate 16 | Parts by mass | | | | 15 | | |
| | | Silica | Silica-1 | Parts by mass | | | | | 5 | |
| | | CB | N339 | Parts by mass | | | | | | 5 |
| | Surfactant-1 | EMULGEN 102KG | Parts by mass | 4.28 | 2.14 | 0 | 0 | 6.42 | 6.42 |
| | Silane coupling agent | Si75 | Parts by mass | 0 | 0 | 0 | 0 | 0.4 | 0 |
| | Oil | PF30 | Parts by mass | 23.58 | 23.58 | 23.58 | 20 | 23.58 | 23.58 |
| | Vulcanization aid | Zinc oxide | Parts by mass | 2.5 | 2.5 | 2.5 | 2.5 | 2.5 | 2.5 |
| | | Stearic acid | Parts by mass | 2 | 2 | 2 | 2 | 2 | 2 |
| | Aging inhibitor | NOCRAC 6C | Parts by mass | 2 | 2 | 2 | 2 | 2 | 2 |
| | Wax | SUNNOC | Parts by mass | 1.5 | 1.5 | 1.5 | 1.5 | 1.5 | 1.5 |

| | | | Units | Example 13 | Example 14 | Example 15 | Example 16 | Comp. Example 7 | Comp. Example 8 |
|---|---|---|---|---|---|---|---|---|---|
| Second stage | Sulfur | Sulfur | Parts by mass | 1.7 | 1.7 | 1.7 | 1.7 | 1.7 | 1.7 |
| | Vulcanization accelerator | NOCCELER CZ | Parts by mass | 1.7 | 1.7 | 1.7 | 1.7 | 1.7 | 1.7 |
| | | NOCCELER D | Parts by mass | 2 | 2 | 2 | 2 | 2 | 2 |
| Evaluation | Storage modulus (3%, 50°C) | | MPa | 1.59 | 2.63 | 4.17 | 2.23 | 0.82 | 0.73 |
| | Tensile strength | | MPa | 2.34 | 3.08 | 4.06 | 3.74 | 1.69 | 1.28 |

INDUSTRIAL APPLICABILITY

The rubber composition of the disclosure allows molded articles with satisfactory physical properties to be formed, and can therefore be suitably applied for a wide range of purposes including industrial machinery parts, general machine parts, automobile/railway/vehicle/ship/aerospace-related parts, electronic and electrical components, construction and civil engineering materials, daily household items, sports and leisure goods, wind power generation case members, and container and packaging materials.

## Claims

1. A composition containing cellulose nanofibers and a nonionic surfactant, wherein the nonionic surfactant has an aliphatic or aromatic group of 6 to 30 carbon atoms, or a combination thereof, as a hydrophobic portion.

2. The composition according to claim 1, which includes the nonionic surfactant at 10 parts by mass to 50 parts by mass with respect to 100 parts by mass of the cellulose nanofibers.

3. The composition according to claim 1 or 2, wherein a degree of acyl substitution (DS) of the cellulose nanofibers is 0 to 1.7.

4. The composition according to any one of claims 1 to 3, wherein the nonionic surfactant has one or more structures selected from the group consisting of oxyethylene, glycerol and sorbitan as a hydrophilic portion, and the relationship between the number of carbon atoms n of the hydrophobic portion and the number of repeating units m of the hydrophilic portion satisfies the inequality: n > m.

5. The composition according to any one of claims 1 to 4, wherein the nonionic surfactant is one or more selected from the group consisting of compounds represented by the following general formula (1):

$$R\text{-}(OCH_2CH_2)_m\text{-}OH \qquad (1)$$

[where R represents an aliphatic or aromatic group of 6 to 30 carbon atoms, or a combination thereof, and m is a natural number smaller than the number of carbon atoms of R], and compounds represented by the following general formula (2):

$$R_1OCH_2\text{-}(CHOH)_4\text{-}CH_2OR_2 \qquad (2)$$

[where $R_1$ and $R_2$ each independently represent a hydrogen atom, an aliphatic or aromatic group of 1 to 30 carbon atoms or a combination thereof, $-COR_3$ {where $R_3$ represents an aliphatic or aromatic group of 1 to 30 carbon atoms or a combination thereof}, or $-(CH_2CH_2O)_y\text{-}R_4$ {where $R_4$ represents a hydrogen atom or an aliphatic or aromatic group of 1 to 30 carbon atoms or a combination thereof, and y is an integer of 1 to 30}.

6. The composition according to any one of claims 1 to 5, which further includes a first rubber component.

7. The composition according to claim 6, wherein the first rubber component includes one or more selected from the group consisting of a styrene-butadiene rubber, a butadiene rubber, an isoprene rubber, a natural rubber, a chloroprene rubber, an acrylonitrile-butadiene rubber, a butyl rubber, a chlorinated butyl rubber, a brominated butyl rubber and an ethylene-propylene diene rubber, and derivatives thereof.

8. The composition according to claim 6 or 7, wherein the first rubber component is a liquid rubber and/or rubber latex particles.

9. The composition according to claim 8, wherein:

   the first rubber component is a liquid rubber, and
   the liquid rubber includes one or more selected from the group consisting of a styrene-butadiene rubber, a butadiene rubber and an isoprene rubber, and derivatives thereof.

10. The composition according to claim 8, wherein:

the first rubber component is rubber latex particles, and
the rubber latex particles include one or more selected from the group consisting of a styrene-butadiene rubber, a butadiene rubber, an isoprene rubber, a natural rubber, a chloroprene rubber, an acrylonitrile-butadiene rubber, a butyl rubber, a chlorinated butyl rubber, a brominated butyl rubber and an ethylene-propylene diene rubber, and derivatives thereof.

11. The composition according to any one of claims 6 to 10, which includes, as solid content, the cellulose nanofibers at 0.5 mass% to 10 mass%, the nonionic surfactant at 10 parts by mass to 50 parts by mass with respect to 100 parts by mass of the cellulose nanofibers, and the first rubber component at 85 mass% to 99.45 mass%.

12. The composition according to any one of claims 6 to 11, wherein a weight-average molecular weight (Mw) of the first rubber component is 100,000 to 2,000,000.

13. A method for producing a composition according to any one of claims 6 to 12, wherein the method includes:

a first mixing step in which cellulose nanofibers and a nonionic surfactant are mixed to obtain a first mixture, and
a second mixing step in which the first mixture and a first rubber component are mixed to obtain a second mixture.

14. The method according to claim 13, which further includes a step of drying the first mixture after the first mixing step.

15. The method according to claim 13 or 14, wherein:

the first rubber component is a liquid rubber, and
the method further includes a step of drying the second mixture after the second mixing step.

16. A powder composed of the composition according to any one of claims 1 to 12.

17. A powder composed of a composition that includes cellulose nanofibers and a surfactant, wherein:

a compacted bulk density of the powder is 0.01 g/cm$^3$ to 0.30 g/cm$^3$, and
a specific surface area of the powder is 5 m$^2$/g to 50 m$^2$/g.

18. The powder according to claim 17, wherein the composition is a composition according to any one of claims 1 to 5.

19. A master batch which is a kneaded blend of the powder according to any one of claims 16 to 18 and a second rubber component.

20. The master batch according to claim 19, which includes the cellulose nanofibers at 10 parts by mass to 50 parts by mass and the nonionic surfactant at 1 part by mass to 25 parts by mass with respect to 100 parts by mass of the rubber component.

21. A method for producing a master batch, wherein the method includes a step of kneading the powder according to any one of claims 16 to 18 and a second rubber component to obtain a master batch.

22. A rubber composite which is a kneaded blend of the powder according to any one of claims 16 to 18 or the master batch according to claim 19 or 20, and a third rubber component.

23. A method for producing a rubber composite, wherein the method includes a step of obtaining a rubber composite by:

kneading a powder according to any one of claims 16 to 18 and a third rubber component, or
forming a master batch by the method according to claim 21 and then kneading the master batch with a third rubber component.

24. A cured rubber product, which is the cured product of the rubber composite according to claim 22.

25. A method for producing a cured rubber product, wherein the method includes:

a step of obtaining a rubber composite by the method according to claim 23, and

a step of curing the rubber composite to obtain a cured rubber product.

26. A shoe outsole which includes a cured rubber product according to claim 24.

27. A tire which includes a cured rubber product according to claim 24.

28. Vibration-proof rubber which includes a cured rubber product according to claim 24.

29. A drive belt which includes a cured rubber product according to claim 24.

# FIG. 1

# FIG. 2

## INTERNATIONAL SEARCH REPORT

| | International application No. |
|---|---|
| | **PCT/JP2022/007021** |

**A.    CLASSIFICATION OF SUBJECT MATTER**

**B60C 1/00**(2006.01)i; **C08J 3/22**(2006.01)i; **C08K 5/06**(2006.01)i; **C08L 1/00**(2006.01)i; **C08L 1/02**(2006.01)i; **C08L 7/00**(2006.01)i; **C08L 9/00**(2006.01)i; **C08L 21/00**(2006.01)i; **C08L 71/02**(2006.01)i
FI:     C08L1/02; C08L21/00; C08L1/00; C08L7/00; C08L9/00; C08L71/02; C08K5/06; B60C1/00 Z; C08J3/22 CEQ

According to International Patent Classification (IPC) or to both national classification and IPC

**B.    FIELDS SEARCHED**

Minimum documentation searched (classification system followed by classification symbols)

B60C1/00; C08J3/22; C08K5/06; C08L1/00; C08L1/02; C08L7/00; C08L9/00; C08L21/00; C08L71/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2012-102324 A (RIKEN TECHNOS CORP.) 31 May 2012 (2012-05-31) examples | 1, 2, 4, 16 |
| A | | 3, 5-15, 17-29 |
| X | JP 2013-166818 A (KYOTO CITY) 29 August 2013 (2013-08-29) claims, paragraph [0081], examples | 1, 4, 5, 16 |
| A | | 2, 3, 6-15, 17-29 |
| X | JP 2016-147996 A (SUMITOMO RUBBER IND., LTD.) 18 August 2016 (2016-08-18) claims, paragraphs [0050], [0056], [0057], examples | 1, 6-8, 10, 13, 16, 19, 21, 22, 24, 27 |
| A | | 2-5, 9, 11, 12, 14, 15, 17, 18, 20, 23, 25, 26, 28, 29 |

☑ Further documents are listed in the continuation of Box C.          ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 April 2022** | **26 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

| International application No. |
|---|
| **PCT/JP2022/007021** |

### C.    DOCUMENTS CONSIDERED TO BE RELEVANT

| Category* | Citation of document, with indication, where appropriate, of the relevant passages | Relevant to claim No. |
|---|---|---|
| X | JP 2018-15149 A (MARUGO KK) 01 February 2018 (2018-02-01)<br>claims, examples | 1-7, 13, 14, 16, 22, 24, 26 |
| A | | 8-12, 15, 17-21, 23, 25, 27-29 |
| X | JP 2019-14864 A (ASAHI KASEI CORP.) 31 January 2019 (2019-01-31)<br>claims, paragraph [0101], examples | 1, 4, 5, 16 |
| A | | 2, 3, 6-15, 17-29 |
| X | WO 2020/145354 A1 (ASAHI KASEI CORP.) 16 July 2020 (2020-07-16)<br>examples | 1, 3-5 |
| A | | 2, 6-29 |
| X | JP 2021-1253 A (SUMITOMO RUBBER IND., LTD.) 07 January 2021 (2021-01-07)<br>claims, paragraphs [0089], [0090], [0159], examples | 1, 2, 6-8, 10, 13, 16, 19, 21, 22, 24, 26-29 |
| A | | 3-5, 9, 11, 12, 14, 15, 17, 18, 20, 23, 25 |
| A | WO 2015/178485 A1 (THE YOKOHAMA RUBBER CO., LTD.) 26 November 2015 (2015-11-26)<br>entire text, all drawings | 1-29 |
| A | JP 2017-171764 A (NIPPON ZEON CO., LTD.) 28 September 2017 (2017-09-28)<br>entire text | 1-29 |
| A | JP 2018-35469 A (MEISEI KAGAKU KOGYO KK) 08 March 2018 (2018-03-08)<br>entire text | 1-29 |
| A | WO 2018/147342 A1 (NIPPON PAPER INDUSTRIES CO., LTD.) 16 August 2018 (2018-08-16)<br>entire text | 1-29 |
| A | WO 2018/143150 A1 (KATAYAMA CHEMICAL INC.) 09 August 2018 (2018-08-09)<br>entire text | 1-29 |
| A | JP 2018-131573 A (NIPPON PAPER INDUSTRIES CO., LTD.) 23 August 2018 (2018-08-23)<br>entire text, all drawings | 1-29 |
| A | JP 2019-44087 A (JAPAN STEEL WORKS LTD.) 22 March 2019 (2019-03-22)<br>entire text, all drawings | 1-29 |
| A | WO 2019/208313 A1 (ASAHI KASEI CORP.) 31 October 2019 (2019-10-31)<br>entire text | 1-29 |
| A | JP 2021-1292 A (SUMITOMO RUBBER IND., LTD.) 07 January 2021 (2021-01-07)<br>entire text | 1-29 |

Form PCT/ISA/210 (second sheet) (January 2015)

## INTERNATIONAL SEARCH REPORT
### Information on patent family members

International application No.

**PCT/JP2022/007021**

| Patent document cited in search report | | | Publication date (day/month/year) | Patent family member(s) | | | Publication date (day/month/year) |
|---|---|---|---|---|---|---|---|
| JP | 2012-102324 | A | 31 May 2012 | (Family: none) | | | |
| JP | 2013-166818 | A | 29 August 2013 | (Family: none) | | | |
| JP | 2016-147996 | A | 18 August 2016 | (Family: none) | | | |
| JP | 2018-15149 | A | 01 February 2018 | (Family: none) | | | |
| JP | 2019-14864 | A | 31 January 2019 | EP<br>claims, paragraph [0085],<br>examples<br>KR 10-2018-0077000<br>CN | 3447085<br><br><br><br>108884272 | A1<br><br><br>A<br>A | |
| WO | 2020/145354 | A1 | 16 July 2020 | (Family: none) | | | |
| JP | 2021-1253 | A | 07 January 2021 | (Family: none) | | | |
| WO | 2015/178485 | A1 | 26 November 2015 | US<br>entire text, all drawings<br>CN | 2017/0183483<br><br>106459507 | A1<br><br>A | |
| JP | 2017-171764 | A | 28 September 2017 | (Family: none) | | | |
| JP | 2018-35469 | A | 08 March 2018 | (Family: none) | | | |
| WO | 2018/147342 | A1 | 16 August 2018 | US<br>entire text<br>EP<br>CN | 2020/0362146<br><br>3581618<br>110291149 | A1<br><br>A1<br>A | |
| WO | 2018/143150 | A1 | 09 August 2018 | (Family: none) | | | |
| JP | 2018-131573 | A | 23 August 2018 | (Family: none) | | | |
| JP | 2019-44087 | A | 22 March 2019 | EP<br>entire text, all drawings<br>TW<br>CN | 3680290<br><br>201920294<br>111094424 | A1<br><br>A<br>A | |
| WO | 2019/208313 | A1 | 31 October 2019 | EP<br>entire text<br>CN | 3786215<br><br>112004863 | A1<br><br>A | |
| JP | 2021-1292 | A | 07 January 2021 | US<br>entire text<br>EP | 2020/0399444<br><br>3757159 | A1<br><br>A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019147877 A

**Non-patent literature cited in the description**

- **HIROKAWA SHOTEN.** Japanese Pharmacopeia

- Mokushitsu Kagaku Jikken Manual. The Japan Wood Research Society, 2000, 92-97